# EUROPÄISCHE PATENTSCHRIFT

(11) **EP 2 957 424 B1**
(45) Veröffentlichungstag und Bekanntmachung des Hinweises auf die Patenterteilung: **08.03.2017**
(21) Anmeldenummer: 14173311.3
(22) Anmeldetag: 20.06.2014
(51) Int. Cl.: B32B 25/08, B32B 27/34

(54) **Verbundteil**
Composite part
Pièce composite

(43) Veröffentlichungstag der Anmeldung: 23.12.2015
(73) Patentinhaber: LANXESS Deutschland GmbH, 50569 Köln (DE)
(72) Erfinder: Dederichs, Thomas, 50679 Köln (DE); Früh, Thomas, 42105 Wuppertal (DE); Bischoff, Andreas, 41542 Dormagen (DE); Thust, Torsten, 51061 Köln (DE); Giese, Ulrich, 31191 Algermissen (DE)

(56) Entgegenhaltungen:
- DATABASE WPI Week 200217 Thomson Scientific, London, GB; AN 2002-125408 XP002731885, & JP 2001 162722 A (TOKAI RUBBER IND LTD) 19. Juni 2001 (2001-06-19)

## Beschreibung

Die Erfindung betrifft ein Verbundteil, im folgenden auch als Verbund bezeichnet, das mittels 2-Komponenten-Verarbeitungsverfahren, bevorzugt 2-Komponenten-Spritzguss (2K-Spritzguss), aus mindestens einem Teilstück aus mindestens einer mit bei Raumtemperatur flüssigem Polybutadien-Copolymer additivierten Polyamidformmasse und mindestens einem Teilstück aus wenigstens einem Elastomer, erhältlich aus mit elementarem Schwefel zu vulkanisierenden bzw. zu vernetzenden Kautschuk, hergestellt wird bzw. nach deren Verarbeitung aus diesen Komponenten zusammengesetzt ist.

Verbundteile aus steifen thermoplastischen sowie gummielastischen Formteilen werden üblicherweise durch Kleben, Verschrauben, mechanisches Verkrallen oder unter Verwendung eines Haftvermittlers zusammengefügt, da bei den weitaus meisten Kombinationen von Thermoplast und Elastomer keine ausreichend feste Haftung erzielt werden kann.

### Stand der Technik

Im Stand der Technik gibt es zahlreiche Offenbarungen für einen Verbund aus Polyamid und Elastomer, erhältlich aus mit elementarem Schwefel zu vulkanisierenden bzw. zu vernetzenden Kautschuk, unter Verwendung von Haftvermittlern. Der Haftvermittler wird auf die Komponente, entweder Thermoplast oder Elastomer, aufgetragen, die zuerst gefertigt wurde. Wird die Thermoplast Komponente zuerst hergestellt, wird der Haftvermittler auf die Oberfläche des Thermoplasten aufgetragen, danach wird die zu vernetzende Kautschukmischung aufgespritzt und vulkanisiert. Wird das Elastomer zuerst gefertigt, wird der Haftvermittler auf dessen Oberfläche aufgetragen, bevor der Thermoplast aufgespritzt wird. Abhängig von der Materialkombination kommt es zur Anwendung eines Ein-Schicht- oder eines Zwei-Schicht-Haftsystems. Üblicherweise und bevorzugt einzusetzende Haftvermittler sind in J. Schnetger "Lexikon der Kautschuktechnik", 3. Auflage, Hüthig Verlag Heidelberg, 2004, Seite 203, und in B. Crowther, "Handbook of Rubber Bonding", iSmithers Rapra Publishing, 2001, Seiten 3 bis 55, erwähnt. Besonders bevorzugt wird wenigstens ein Haftvermittler der Marke Chemlok® oder Chemosil® (Fa. Lord) oder der Marke Cilbond® (Fa. CIL) eingesetzt. Bei der Verwendung von Haftvermittlern ist prinzipiell die Verwendung von umweltschädlichen Lösungsmitteln und/oder Schwermetallen problematisch, sofern keine wasserbasierenden Haftvermittler eingesetzt werden. Generell stellt auch der Auftrag eines Haftvermittlers einen zusätzlichen Arbeitsschritt dar, der einen zusätzlichen Arbeitsgang und somit Zeit und Aufwand erfordert.

In der EP 0 142 930 A2 wird ein Weg aufgezeigt, wie Verbundteile aus Polyamiden und EPDM-Elastomeren hergestellt werden können. Hierbei wird dem Kautschuk ein Gemisch aus dem Vernetzungsmittel Dicumylperoxid und dem Coagenz N,N'-m-Phenylendimaleinimid zugesetzt. Der Zusatz des Coagenz N,N'-m-Phenylendimaleinimid ist hier essentiell für hohe Haftfestigkeiten. Das in der EP 0 142 930 A2 beschriebene Verfahren ist jedoch nur mit einer peroxidisch vernetzten Elastomer Komponente durchführbar. Bei Verwendung einer Vulkanisation mit Schwefel kommt es zu keiner Haftung.

Die US-A 5132182 beschreibt, dass Polyamide mit einem Überschuss an Aminoendgruppen eine gute Haftung zu carboxylierten EPDM- oder NBR-Kautschuken aufweisen. Gemäß US-A 5132182 können nur durch Carboxylierung chemisch modifizierte Kautschuke eingesetzt werden. Ferner ist das dort beschriebene Verfahren reduziert auf eine Peroxid-Vernetzung der Elastomer Komponente. Ein mit Schwefel vulkanisiertes Elastomer zeigt keine Haftung zum Polyamid.

EP 1 552 965 A1 beschreibt kautschukverstärkte Strukturen mit Polyamid basierten Harzzusammensetzungen und wenigstens einer peroxidisch vernetzten Kautschuk-Komponente, die mit der Harzkomponente ohne Klebstoff verbunden ist. Bei einer Vernetzung der Kautschukmischung mit dem Schwefelspender Tetramethylthiuramdisulfid wird unter Zusatz des Vulkanisationsaktivators Trimethylolpropantrimethacrylat lediglich ein mittlerer Haftwert "B" erzielt.

Die EP 1 666 535 A1 beschreibt Verbundteile, die aus einer Elastomer Komponente und einer Polyamid Komponente in Direkthaftung hergestellt werden. Der Polyamid Komponente werden dabei Coagenzien für die peroxidische Vernetzung und Radikal-fangende Stabilisatoren zugesetzt. Die EP 1 666 535 A1 lehrt jedoch ausschließlich die Vernetzung der Kautschuk-Komponente mit einem organischen Peroxid für eine Direkthaftung in Kombination mit einer Polyamid Komponente.

EP 1 533 344 A1 und JP 2003 320 618 A1 beschreiben den Einsatz von Coagenzien für die peroxidische Vernetzung im Thermoplasten, um in Direkthaftung ein Verbundteil mit einer Elastomer Komponente herzustellen. Beispiel 5 der EP 1 533 344 A1 lehrt neben dem Coagenz Trimethylolpropantrimethacrylat auch den Zusatz von Vestenamer® 8012 / Polyoctenamer in Polyamid PA612. Das Verfahren weist jedoch Nachteile auf. Die Beispiele der EP 1 533 344 A1 zeigen ausschließlich die Vernetzung der Kautschuk-Komponente mit einem organischen Peroxid für eine Direkthaftung in Kombination mit einer Polyamid Komponente.

Die Direkthaftung von Polyamid-basierten Formteilen zu peroxidisch vernetzten Elastomeren bzw. darauf basierende Verbundteile sind somit aus dem Stand der Technik bekannt, nicht aber die Direkthaftung von Polyamid-basierten Formteilen zu mit elementarem Schwefel vernetzten Elastomeren bzw. darauf basierenden Verbundteilen. Eine Vernetzung von Kautschuken über die Schwefelvulkanisation ist aber für die Kautschukindustrie von weitaus größerer Bedeutung als die Peroxid-Vernetzung (F. Röthemeyer, F. Sommer "Kautschuktechnologie", 2. Überarbeitete Auflage, Carl Hanser Verlag München Wien, 2006, Seite 69 bis 70, Seite 87, Seite 93, Seite 102, Seite 147, Seite 276 bis 277, Seite 312 und Seite 320 bis 321). Hierfür gibt es mehrere Gründe. Die Schwefelvulkanisation ist preiswerter als die Peroxid-Vernetzung und deshalb technisch viel weiter verbreitet als die Vernetzung über Peroxide. Schließlich lassen sich mit der Schwefelvulkanisation Vulkanisate erhalten, die hinsichtlich ihrer dynamischen Materialeigenschaften, der Reißfestigkeit und des Weiterreißwiderstands den Peroxid-Vulkanisaten überlegen sind. Darüber hinaus lassen sich bestimmte Kautschuke gar nicht mit Peroxiden vernetzen, z.B. Butylkautschuk (IIR) und Halo-Butylkautschuk (XIIR), und für manche Kautschuke, vor allem für Naturkautschuk (NR), dem wirtschaftlich bedeutendsten Kautschuk, aber auch für Butadienkautschuk (BR), Isoprenkautschuk (IR) und Styrol-Butadien-Kautschuk (SBR), hat die Peroxidvernetzung in der Praxis keine Bedeutung. In diesen Fällen ist die Schwefelvulkanisation das dominierende Vernetzungsbedingungen. Die Peroxid-Vernetzung ist zudem empfindlich gegenüber Luftsauerstoff, was zu einer Einschränkung der möglichen Vulkanisationsverfahren führt. Zuletzt können aufgrund des Vernetzungsmechanismus über Radikale verschiedene Mischungsbestandteile die Peroxidvernetzung stören. Im Gegensatz dazu ist die Schwefelvulkanisation gegenüber den meisten ansonsten im Kautschuk einzusetzenden Mischungsbestandteilen unempfindlich.

Der gemäß der Lehre aus DE 3602705 A1 klassische 2K-Spritzgieß-Verbund in Direkthaftung aus Polyphenylenethern (PPE) enthaltenden Komponenten einerseits und Schwefel vulkanisierten Elastomeren, beispielsweise Styrol-Butadien-Kautschuk (SBR) andererseits, basiert auf dem Spezialfall einer thermodynamischen Verträglichkeit und kann aus diesem Grunde nicht auf Verbunde aus einem Polyamid (PA) Teilstück einerseits und einem Schwefel vulkanisierten Elastomer Teilstück andererseits übertragen werden. Eine Lösung für Verbundteile bestehend aus einer Polyamid Komponente und einer Elastomer Komponente, wobei letztere aus einem mit elementarem Schwefel zu vulkanisierenden bzw. zu vernetzenden Kautschuk erhalten wird, ist deshalb ein lange bestehendes Bedürfnis im Markt.

Beim Verbinden einer in einem ersten Herstellungsschritt gefertigten Thermoplast Komponente mit einer Elastomer Komponente unter Verwendung eines Haftvermittlers, wie oben erwähnt, oder unter Direkthaftung kommt dem Vernetzungssystem der Kautschukmischung eine für die Höhe der Haftkraft entscheidende Rolle zu. Diese wichtige Rolle des Vernetzungssystems ist nicht nur beim Verbinden von Thermoplast Komponente mit zu vernetzenden Kauschukmischungen zu beobachten, sondern allgemein beim Verbinden von in einem ersten Herstellungsschritt gefertigten unterschiedlichen Substratmaterialien, z.B. Metall, Glas, etc, mit zu vernetzenden Kauschukmischungen.

Bei der Verwendung von Haftvermittlern zum Verbinden von Metall mit zu vernetzenden Kautschukmischungen kann die Wahl des Vernetzungsmittels einen deutlichen Effekt auf die Haftung haben (B. Crowther, "Handbook of Rubber Bonding", iSmithers Rapra Publishing, 2001, Seiten 57 bis 79). Hersteller von Haftvermittlern unterscheiden bei Verwendung von Haftvermittlern für die Haftung von zu vernetzenden Kautschukmischungen auf Metall- und festen Kunststoff-Substraten zwischen Schwefel- und Peroxid-Vernetzung. Die Lord Corporation bietet für mit Schwefel zu vernetzende Kautschukmischungen und für mit Peroxiden zu vernetzende Kautschukmischungen unterschiedliche Haftvermittler unter der Marke Chemsil® an (Lord Product Brochure "Rubber-to-Substrate Adhesives for the Industry", Lord Application Guide "Chemlok® Elastomer Bonding Guide", Lord Corperation, Cary, USA). Im Product Selector auf http://cilbond.com (Abrufdatum 16.12.2013) des Herstellers von Haftvermittlern Chemical Innovations Limited, Preston, UK, wird zur Auswahl des einzusetzenden Haftvermittlers bei der Auswahl der anzubindenden Elastomere zwischen unterschiedlichen Vernetzungsmitteln unterschieden. So muß beispielsweise bei HNBR-Kautschukmischungen zwischen Schwefel-Vernetzung und Peroxid-Vernetzung ausgewählt werden.

Auch im Falle der Direkthaftung, also wenn die zu vernetzende Kautschukmischung ohne die Verwendung eines Haftvermittlers direkt auf das Substrat, beispielsweise die Thermoplast Komponente, aufgebracht und während der Vernetzung der Kautschukkomponente zur Haftung gebracht wird, trägt das Vernetzungsmittel ganz entscheidend zur Haftung zwischen Substrat und Elastomer bei.

Betreffend die Haftung zu Metalloberflächen können vermessingte Metallteile oder allgemein Messing-Substrate direkt an mit Schwefel zu vernetzende Kautschukmischungen gebunden werden. Mit Peroxiden zu vernetzende Kautschukmischungen können nicht in Direkthaftung mit Messing verbunden werden (B. Crowther, "Handbook of Rubber Bonding", iSmithers Rapra Publishing, 2001, Seiten 163 bis 195). Auch verzinkte Metallteile können direkt an mit Schwefel zu vernetzende Kautschukmischungen zur Haftung gebracht werden (F. Röthemeyer, F. Sommer "Kautschuktechnologie", 2. Überarbeitete Auflage, Carl Hanser Verlag München Wien, 2006, Seite 829 bis 830). Für die Direkthaftung an Metalloberflächen werden den Kautschukmischungen mit peroxidischem Vernetzungssystem spezielle Coagenzien zugesetzt, bevorzugt Metallsalze von Acryl- oder Methacrylsäure, insbesondere Zinkdimethacrylat. Der Zusatz dieser Coagenzien zu mit Schwefel zu vernetzenden Kautschukmischungen führt in der Direkthaftung zu Metall nicht zu den gewünschten Ergebnissen (F. Röthemeyer, F. Sommer "Kautschuktechnologie", 2. Überarbeitete Auflage, Carl Hanser Verlag München Wien, 2006, Seite 829 bis 830; B. Crowther, "Handbook of Rubber Bonding", iSmithers Rapra Publishing, 2001, Seiten 213 bis 240).

Bei der Direkthaftung zu Kunststoffen, im Rahmen der vorliegenden Erfindung zu Polyamiden, kommt deshalb dem Vernetzungsmittel in der Kautschukmischung eine ganz entscheidende Bedeutung zu. Gemäß einschlägiger Lehrbuchliteratur können Kautschuke mit C=C-Doppelbindungen, d.h. prinzipiell mit Schwefel vernetzbar, bzw. Kautschukmischungen daraus, mit Peroxidvernetzung in Direkthaftung mit Polyamid verbunden werden. Während für andere Kunststoff-Elastomer-Kombinationen auch mehrere mögliche Vernetzungsmittel eingesetzt werden können, ist für XNBR bisher ausschließlich die Peroxidvernetzung mit PA612 beschrieben worden (Handbuch Kunststoff-Verbindungstechnik, hrsg. von G. W. Ehrenstein, Carl Hanser Verlag München Wien, 1990, Seite 530 bis 531; F. Röthemeyer, F. Sommer "Kautschuktechnologie", 2. Überarbeitete Auflage, Carl Hanser Verlag München Wien, 2006, Seite 833 bis 834). Polyamidformmassen auf Basis von PA612 für die Direkthaftung mit peroxidisch zu vernetzenden Kautschukmischungen sind kommerziell als Vestamid® von der Evonik Degussa GmbH, Marl, erhältlich. Der Stand der Technik zum Einsatz dieser Vestamid®-Typen ist inzwischen weiter entwickelt worden, so dass diese nicht nur mit peroxidisch zu vernetzenden XNBR-Kautschukmischungen (G. Huhn, Gummi Fasern Kunststoffe, 2000, Jahrgang 53, Ausgabe 10, Seite 720 bis 721), sondern auch mit peroxidisch zu vernetzenden NBR-Kautschukmischungen (K. M. Diedrich, Gummi Fasern Kunststoffe, 2003, Jahrgang 56, Ausgabe 5, Seite 306 bis 311) und mit peroxidisch zu vernetzenden EPDM-Kautschukmischungen (F. Lorenz, K. Kuhmann, KunstStoff Trends, 2008, Ausgabe 4, Seite 28 bis 29; Broschüre "High-Performance Polymers in Plastic-Rubber Composites", Evonik Degussa GmbH, Marl) eingesetzt werden können. Während für andere Kunststoffe und Elastomere mehrere Vernetzungsmittel, darunter auch Schwefel, für die Direkthaftung publiziert sind, ist es bemerkenswert und deshalb herauszustellen, dass trotz dieser Weiterentwicklungen für prinzipiell mit Schwefel vernetzbare Kautschuke mit C=C-Doppelbindungen im Falle des Polyamids bisher nur das Vernetzungsmittel Peroxid verwendet werden konnte. Schwefel konnte bisher nicht erfolgreich als Vernetzer für Kautschuk Komponenten eingesetzt werden, wenn diese für einen Verbund in Direkthaftung mit einer Polyamid Komponente vorgesehen waren.

Die Erkenntnisse aus dem Stand der Technik zu Verbunden von Kautschuken mit anorganischen Substraten wie Metalle oder Glas können nicht auf organische Substrate, vorzugsweise Kunststoffe, insbesondere Polyamide, übertragen werden. Insbesondere Kunststoffen wie Polyamid werden nämlich zumeist organische Additive zur Erzielung bestimmter Eigenschaften im später daraus zu fertigenden Erzeugnis zugesetzt. Während also der Einsatz organischer Additive bei Kunststoffen wie Polyamid durchaus üblich ist, würden organische Additive in Metallen oder Glas bei den hohen Verarbeitungstemperaturen von Metallen oder Glas zerstört werden, sei es unter Luftausschluss zersetzt oder durch Luftsauerstoff oxidiert.

Für die Haftung von zu vernetzenden Kautschukmischungen auf organischen Substratoberflächen, bevorzugt Kunststoffen, insbesondere Polyamid, ist also generell zusammen zu fassen, dass dem Vernetzungsmittel eine entscheidende Bedeutung zukommt und dass insbesondere Direkthaftungsverfahren, die auf der Vernetzung einer Kautschukmischung mit Peroxiden basieren, nicht mit Direkthaftungsverfahren auf Basis einer Vernetzung mit Schwefel vergleichbar sind.

Ausgehend von diesem Stand der Technik stellte sich die Aufgabe, ein Verfahren zur Herstellung eines festen Verbundes aus einem Teilstück erhältlich aus einer Polyamidformmasse und einem Teilstück aus einer Elastomer Komponente, erhältlich aus mit elementarem Schwefel zu vulkanisierenden bzw. zu vernetzenden Kautschuk, in Direkthaftung bereitzustellen.

Überraschend wurde gefunden, dass die oben beschriebene Aufgabe der vorliegenden Erfindung gelöst wird, wenn allein die Polyamidformmasse mit bei Raumtemperatur (RT) flüssigem Polybutadien-Copolymer, additiviert wird und elementarer Schwefel für die Vulkanisation der Elastomer Komponente, erhältlich aus mit elementarem Schwefel zu vulkanisierenden bzw. zu vernetzenden Kautschuk, eingesetzt wird. Darüber hinaus wurde überraschenderweise gefunden, dass bei der erfindungsgemäßen Vorgehensweise auf Haftvermittler jeglicher Art verzichtet werden kann und trotzdem hohe Haftwerte mit einer Haftfestigkeit in einer 90°-Schälprüfung in Anlehnung an DIN ISO 813 von mindestens 3 N/mm, sowie eine Reißspannung der Elastomer Komponente von wenigstens 10 MPa und eine Reißdehnung der Elastomer Komponente von mindestens 300% erzielt werden.

### Erfindung

Gegenstand der Erfindung ist ein Verbundteil, das aus mindestens einem Teilstück hergestellt aus mindestens einer Polyamidformmasse und mindestens einem Teilstück hergestellt aus wenigstens einem Elastomer zusammengesetzt ist, dadurch gekennzeichnet, dass die Polyamidformmasse eine Mischung von Polyamid mit wenigstens einem bei Raumtemperatur (RT) flüssigen Polybutadien-Copolymer enthält und das Elastomer Teilstück aus mit elementarem Schwefel zu vernetzenden bzw. zu vulkanisierenden Kautschuk hergestellt wurde.

Die einzelnen Teilstücke des erfindungsgemäßen Verbundteils sind makroskopische Formteile, nicht jedoch z.B. dispergierte Partikel in einem Kunststoff-Elastomer-Blend oder auch nicht Polyamid-Fasern in einer Elastomer-Matrix. Solche Blends sind daher keine Verbundteile im Sinne der Erfindung.

### Bevorzugte Ausführungsformen der Erfindung

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Sofern nicht anders angegeben sind alle Prozentangaben Gewichtsprozente. Sofern nicht anders angegeben beziehen sich alle Angaben auf Raumtemperatur (RT) = 23 +/- 2 °C und Normaldruck 1,0 bar.

Überraschenderweise kann zur Herstellung eines erfindungsgemäßen Verbunds auf Haftvermittler jeglicher Art verzichtet werden und trotzdem werden hohe Haftwerte mit einer Haftfestigkeit in einer 90°-Schälprüfung in Anlehnung an DIN ISO 813 von mindestens 3 N/mm, sowie eine Reißspannung der Elastomer Komponente von wenigstens 10 MPa und eine Reißdehnung der Elastomer Komponente von mindestens 300% erzielt. Erfindungsgemäß bevorzugt wird deshalb auf jeglichen Haftvermittler zwischen dem Polyamid Teilstück und dem Elastomer Teilstück verzichtet.

Erfindungsgemäß bevorzugt wird ein Verbundteil in Direkthaftung erhalten.

Bevorzugter Gegenstand der Erfindung ist ein Verbundteil, das aus mindestens einem Teilstück hergestellt aus mindestens einer Polyamidformmasse und mindestens einem Teilstück hergestellt aus wenigstens einem Elastomer zusammengesetzt ist, dadurch gekennzeichnet, dass die Polyamidformmasse zu mindestens 30 Gew.-%, bevorzugt zu mindestens 45 Gew.-%, besonders bevorzugt zu mindestens 55 Gew.-% und insbesondere bevorzugt zu mindestens 65 Gew.-% eine Mischung von
a) 60 bis 99,9 Gew.-Teile, bevorzugt 75 bis 99,8 Gew.-Teile, besonders bevorzugt 85 bis 99,7 Gew.-Teile und ganz besonders bevorzugt 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile, ganz besonders bevorzugt 0,5 bis 12 Gew.-Teile wenigstens eines bei RT flüssigen Polybutadien-Copolymers enthält,
wobei die Summe der Gew.-Teile von a) und b) 100 beträgt und das Elastomer Teilstück aus mit elementarem Schwefel zu vernetzenden bzw. zu vulkanisierenden Kautschuk hergestellt wurde.

Gegenstand der Erfindung ist auch ein Verfahren zur Herstellung derartiger Verbundteile sowie die Verwendung von Polybutadien-Copolymer zur Verbesserung der Verbundhaftung Polyamid-basierter Formteile mit einer Elastomer Komponente, erhältlich aus mit elementarem Schwefel zu vulkanisierenden bzw. zu vernetzenden Kautschuk.

Erfindungsgemäß bedeutet ein fester Verbund einer Elastomer Komponente an einer Polyamid Komponente eine Haftfestigkeit in einer 90°-Schälprüfung in Anlehnung an DIN ISO 813 von mindestens 3 N/mm, sowie eine Reißspannung der Elastomer Komponente von wenigstens 10 MPa und eine Reißdehnung der Elastomer Komponente von mindestens 300%.

Ein fester Verbund aus einem Teilstück erhältlich aus einer Polyamidformmasse und einem Teilstück aus einer Elastomer Komponente, erhältlich aus mit elementarem Schwefel zu vulkanisierenden bzw. zu vernetzenden Kautschuk, zeichnet sich erfindungsgemäß durch eine Haftfestigkeit in einer 90°-Schälprüfung in Anlehnung an DIN ISO 813 von mindestens 3 N/mm aus. Haftfestigkeiten unterhalb von 3 N/mm sind für das Vorliegen eines festen Verbundes zu niedrig. Niedrige Haftfestigkeiten unterhalb von 3 N/mm werden in der industriellen Praxis auch als Montagehaftung bezeichnet. Eine Mindest-Haftfestigkeit von 3 N/mm hat sich als Kriterium für einen festen Verbund aus einem Polyamid Teilstück und einem Elastomer Teilstück bewährt. So bezeichnet beispielsweise die JP2010269481 A2 Haftfestigkeiten eines Verbundes aus einem Polyamid Teilstück und einem Elastomer Teilstück gemessen mit einer Schälprüfung wie folgt: < 3 N/mm: nicht akzeptabel, ≥ 3 N/mm und ≤ 4 N/mm: gut, > 4 N/mm: ausgezeichnet.

Die Reißspannung bzw. Bruchspannung und die Reißdehnung bzw. Bruchdehnung sind Kenngrößen in der Werkstoffprüfung, die in einem Zugversuch bestimmt werden (F. Röthemeyer, F. Sommer "Kautschuktechnologie", 2. überarbeitete Auflage, Carl Hanser Verlag München Wien, 2006, Seite 494 bis 496; Die Kunststoffe - Chemie, Physik, Technologie, hrsg. von B. Carlowitz, Carl Hanser Verlag München Wien, 1990, S. 628 bis 633). Die DIN 53504 beschreibt ein Verfahren zur Ermittlung der Zugspannungs-Dehnungs-Eigenschaften vulkanisierter und thermoplastischer Kautschuke. Die Eigenschaften, die bestimmt werden können, sind die Zugfestigkeit, Bruchspannung, Bruchdehnung, Spannung bei einer gegebenen Dehnung, Längung bei einer gegebenen Beanspruchung, Streckspannung und Dehnung bei Streckgrenze. Bei der Zugprüfung werden die Probekörper unter konstanter Dehngeschwindigkeit bis zum Riss gedehnt und die dafür nötige Kraft und Längenänderung aufgezeichnet. Reißspannung und Reißdehnung werden im Rahmen der vorliegenden Erfindung durch Zugversuche analog zu DIN 53504 ermittelt. Die Reißspannung σ_{R}, auch als Reißfestigkeit bezeichnet, ist definiert als der Quotient aus der im Augenblick des Reißens gemessenen Kraft F_{R} und dem Anfangsquerschnitt A₀ des Probekörpers. Die Reißspannung wird in N/mm² oder MPa angegeben. Die Reißdehnung ε_{R} ist definiert als der Quotient aus der im Augenblick des Reißens gemessenen Längenänderung L_{R} - L₀ und der ursprünglichen Messlänge L₀ des Probekörpers. Die Reißdehnung wird in Prozent angegeben.

Eine Reißspannung von mindestens 10 MPa und eine Reißdehnung von mindestens 300% beschreibt eine technisch verwertbare Elastomer Komponente. Technisch verwertbare Elastomere werden über die Vernetzung von Kautschuken, z.B. über Schwefel- oder Peroxid-Vernetzung erhalten. Mit ansteigender Vernetzungsdichte, also der Anzahl von Vernetzungsstellen pro Volumenelement, durchläuft die Reißfestigkeit von Elastomeren ein Maximum (D. L. Hertz Jr., Elastomerics, 1984, Ausgabe 116, Seite 17 bis 21; Science and Technology of Rubber, hrsg. von J. E. Mark, B. Erman, F. R. Eirich, 2. Auflage, Academic Press, San Diego, 1994, Seite 339 bis 343). Man erhält demnach nur in einem bestimmten Intervall der Vernetzungsdichte ein technisch verwertbares Elastomer. Bei zu niedriger oder zu hoher Vernetzungsdichte beträgt die Reißspannung weniger als 10 MPa.

Die Reißspannung von vernetzten Elastomeren wird auch entscheidend über den Zusatz von Additiven bzw. Füllstoffen beeinflusst. Derartige Additive oder Füllstoffe sind pulverförmige Kautschukmischungsbestandteile, die dem Elastomer zur Erzielung bestimmter Eigenschaften des Vulkanisats zugesetzt werden (J. Schnetger "Lexikon der Kautschuktechnik" 3. Auflage, Hüthig Verlag Heidelberg, 2004, Seite 179 bis 180; F. Röthemeyer, F. Sommer "Kautschuktechnologie", 2. überarbeitete Auflage, Carl Hanser Verlag München Wien, 2006, Seite 231 bis 275). Während inaktive Füllstoffe mit eher größeren Partikeldurchmessern die Matrix verdünnen, haben aktive Füllstoffe, insbesondere Ruß oder Kieselsäure mit einem Partikeldurchmesser unter dem der inaktiven Füllstoffe, eine verstärkende Wirkung auf das Elastomer. Verschiedene Kenngrößen wie die Reißspannung und Reißdehnung durchlaufen mit zunehmendem Gehalt aktiver Füllstoffe ein Maximum. Technisch verwertbaren Elastomeren werden also für die Erzielung einer Mindest-Reißspannung und einer Mindest-Reißdehnung zu einem gewissen Gehalt aktive Füllstoffe zugesetzt.

Gegenstand der vorliegenden Erfindung ist aber auch die Verwendung der erfindungsgemäß herzustellenden Verbundteile in flüssige Medien oder gasförmige Medien führenden Erzeugnissen, bevorzugt bei hohen Temperaturen oder unter dem Einfluss unpolarerer Medien, in der chemischen Industrie, der Haushaltsgeräteindustrie oder der Kraftfahrzeugindustrie.

Besonders bevorzugt ist die Verwendung der erfindungsgemäßen Verbundteile als Dichtungen, Membranen, Gasdruckspeicher, Schläuche, Gehäuse für Motoren, Pumpen und elektrisch betriebene Werkzeuge, Walzen, Reifen, Kupplungen, Anschlagpuffer, Transportbänder, Treibriemen, Mehrschicht-Laminate und Mehrschicht-Folien sowie schall- oder schwingungsdämpfende Bauteile.

Die vorliegende Erfindung betrifft deshalb auch ein Verfahren zur Abdichtung von flüssige Medien und/oder gasförmige Medien beinhaltenden Erzeugnissen unter Einsatz wenigstens eines erfindungsgemäßen Verbundteils.

Die vorliegende Erfindung betrifft deshalb auch ein Verfahren zur Herstellung eines Verbundteils das aus mindestens einem Teilstück hergestellt aus mindestens einer Polyamidformmasse und mindestens einem Teilstück hergestellt aus wenigstens einem Elastomer, erhältlich aus mit elementarem Schwefel als Vernetzungsmittel zu vulkanisierenden bzw. zu vernetzenden Kautschuk, zusammengesetzt ist, indem man durch wenigstens ein Formgebungsverfahren entweder das Teilstück aus der Polyamidformmasse mit einer elementaren Schwefel enthaltenden Kautschuk Komponente beaufschlagt und den Vulkanisationsbedingungen des Kautschuks aussetzt, oder das Teilstück aus mit elementarem Schwefel vernetztem Kautschuk mit einer Polyamidformmasse beaufschlagt und die Polyamidformmasse eine Mischung von Polyamid mit wenigstens einem bei Raumtemperatur (RT) flüssigen Polybutadien-Copolymer enthält.

Die vorliegende Erfindung betrifft bevorzugt ein Verfahren zur Herstellung eines Verbunds der aus mindestens einem Teilstück hergestellt aus mindestens einer Polyamidformmasse und mindestens einem Teilstück hergestellt aus wenigstens einem Elastomer, erhältlich aus mit elementarem Schwefel als Vernetzungsmittel zu vulkanisierenden bzw. zu vernetzenden Kautschuk, zusammengesetzt ist, dadurch gekennzeichnet, dass man durch wenigstens ein Formgebungsverfahren entweder das Teilstück aus der Polyamidformmasse mit einer elementaren Schwefel enthaltenden Kautschuk Komponente beaufschlagt und den Vulkanisationsbedingungen des Kautschuks aussetzt, oder das Teilstück aus mit elementarem Schwefel als Vernetzungsmittel vernetztem Elastomer mit einer Polyamidformmasse beaufschlagt und in beiden Fällen die Polyamidformmasse zu mindestens 30 Gew.-%, bevorzugt zu mindestens 45 Gew.-%, besonders bevorzugt zu mindestens 55 Gew.-% und insbesondere bevorzugt zu mindestens 65 Gew.-% eine Mischung von
a) 60 bis 99,9 Gew.-Teile, bevorzugt 75 bis 99,8 Gew.-Teile, besonders bevorzugt 85 bis 99,7 Gew.-Teile und ganz besonders bevorzugt 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile, ganz besonders bevorzugt 0,5 bis 12 Gew.-Teile wenigstens eines bei RT flüssigen Polybutadien-Copolymers enthält,
wobei die Summe der Gew.-Teile von a) und b) 100 beträgt.

Formgebungsverfahren sind bevorzugt auszuwählen aus der Reihe Extrusion, Flachfolienextrustion, Folienblasen, Extrusionsblasformen, Coextrusion, Kalandrieren, Gießen, Pressverfahren, Spritzprägeverfahren, Transferpressverfahren, Transferspritzpressverfahren oder Spritzgießen oder dessen Sonderverfahren, insbesondere Gas-Injektionstechnik, bevorzugt durch 2-Komponenten-Spritzgießen.

Die vorliegende Erfindung betrifft zudem einen Verbund, der aus mindestens einem Teilstück hergestellt aus mindestens einer Polyamidformmasse und mindestens einem Teilstück hergestellt aus wenigstens einem Elastomer, erhältlich aus mit elementarem Schwefel als Vernetzungsmittel zu vulkanisierenden bzw. zu vernetzenden Kautschuk, zusammengesetzt ist, erhältlich durch wenigstens ein Formgebungsverfahren, indem man das Teilstück aus der Polyamidformmasse mit einer elementaren Schwefel als Vernetzungsmittel enthaltenden Kautschuk Komponente beaufschlagt und den Vulkanisationsbedingungen des Kautschuks aussetzt, oder indem man das Teilstück aus mit elementarem Schwefel vernetztem Elastomer mit einer Polyamidformmasse beaufschlagt.

Die vorliegende Erfindung betrifft bevorzugt einen Verbund, der aus mindestens einem Teilstück hergestellt aus mindestens einer Polyamidformmasse und mindestens einem Teilstück hergestellt aus wenigstens einem Elastomer, erhältlich aus mit elementarem Schwefel als Vernetzungsmittel zu vulkanisierenden bzw. zu vernetzenden Kautschuk, zusammengesetzt ist, erhältlich durch wenigstens ein Formgebungsverfahren, indem man das Teilstück aus der Polyamidformmasse mit einer elementaren Schwefel als Vernetzungsmittel enthaltenden Kautschuk Komponente beaufschlagt und den Vulkanisationsbedingungen des Kautschuks aussetzt, oder indem man das Teilstück aus mit elementarem Schwefel vernetztem Elastomer mit einer Polyamidformmasse beaufschlagt und in beiden Fällen die Polyamidformmasse zu mindestens 30 Gew.-%, bevorzugt zu mindestens 45 Gew.-%, besonders bevorzugt zu mindestens 55 Gew.-% und insbesondere bevorzugt zu mindestens 65 Gew.-% eine Mischung von
a) 60 bis 99,9 Gew.-Teile, bevorzugt 75 bis 99,8 Gew.-Teile, besonders bevorzugt 85 bis 99,7 Gew.-Teile und ganz besonders bevorzugt 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile, ganz besonders bevorzugt 0,5 bis 12 Gew.-Teile wenigstens eines bei RT flüssigen Polybutadien-Copolymers enthält,
wobei die Summe der Gew.-Teile von a) und b) 100 beträgt.

### Flüssiges Polybutadien-Copolymer

Erfindungsgemäß wird die Polyamidformmasse für das Polyamid-Teilstück mit wenigstens einem bei RT flüssigen Polybutadien-Copolymer additiviert. Als bei RT flüssiges Polybutadien-Copolymer im Sinne der vorliegenden Erfindung wird bevorzugt ein Copolymer von 1,3-Butadien mit einem weiteren Olefin als Monomer, entweder Styrol oder Acrylnitril, verstanden. Zu deren Herstellung wird in der Regel 1,3-Butadien mit anderen Monomeren Styrol oder Acrylnitril copolymerisiert. Erfindungsgemäß bevorzugt einzusetzende bei RT flüssige Polybutadien-Copolymere sind deshalb Styrol-1,3-Butadien-Copolymere oder Acrylnitril-1,3-Butadien-Copolymere.

Darüber hinaus zeichnet sich das erfindungsgemäß einzusetzende flüssige Polybutadien-Copolymer dadurch aus, dass es eine dynamische Viskosität, gemessen mit der Kegel-Platte-Methode analog nach DIN 53019 bei einer Schergeschwindigkeit von 50 1/s, bei Normaldruck und bei einer Temperatur von 25 °C im Bereich von 100 bis 1.000.000 mPas, bevorzugt im Bereich von 300 bis 300.000 mPas, besonders bevorzugt im Bereich von 500 bis 100.000 mPas aufweist. Diese Polybutadien-Copolymere zeichnen sich dadurch aus, dass sie bei Raumtemperatur (RT) flüssig sind.

Erfindungsgemäß wird das bei RT flüssige Polybutadien-Copolymer in der Polyamidformmasse für das Polyamid Teilstück einzeln oder in Kombinationen mehrerer Polybutadien-Copolymere eingesetzt.

Als flüssiges Polybutadien-Copolymer einzusetzende Styrol-1,3-Butadien-Copolymere werden auch als Styrol-Butadien-Kautschuk SBR bezeichnet. Unter SBR-Kautschuken werden Kautschuke auf Basis von Styrol und 1,3-Butadien verstanden und zwar sowohl Lösungs-SBR-Kautschuke, abgekürzt als "L-SBR", als auch Emulsions-SBR-Kautschuke, abgekürzt als E-SBR (J. Schnetger "Lexikon der Kautschuktechnik" 3. Auflage, Hüthig Verlag Heidelberg, 2004, Seite 508 bis 512, F. Röthemeyer, F. Sommer "Kautschuktechnologie", 2. Überarbeitete Auflage, Carl Hanser Verlag München Wien, 2006, Seite 93 bis 107, H.-G. Elias, "Macromolecules, Volume 2: Industrial Polymers and Syntheses", WILEY-VCH Verlag GmbH, Weinheim, 2007, S. 243 bis 244, H.-G. Elias, "Macromolecules, Volume 4: Applications of Polymers", WILEY-VCH Verlag GmbH, Weinheim, 2009, S. 275 bis 278).

Unter L-SBR versteht man Kautschuke, die in einem Lösungsprozess auf der Basis von Styrol und 1,3-Butadien hergestellt werden. Der Gehalt an einpolymerisiertem Styrol liegt bevorzugt im Bereich von 5 bis 50 Gew.-%, besonders bevorzugt im Bereich von 10 bis 40 Gew.-%. Der Gehalt an einpolymerisiertem Butadien liegt vorzugsweise im Bereich von 50 bis 95 Gew.-%, besonders bevorzugt im Bereich von 60 bis 90 Gew.-%. Der Gehalt an Vinylgruppen im einpolymerisierten Butadien liegt vorzugsweise im Bereich von 10 bis 90 Gew.-%, der Gehalt an 1,4-trans-ständigen Doppelbindungen liegt vorzugsweise im Bereich von 20 bis Gew.-80 % und der Gehalt an 1,4-cis-ständigen Doppelbindungen ist vorzugsweise komplementär zur Summe aus Vinylgruppen und 1,4-trans-ständigen Doppelbindungen. Die Herstellung dieser Styrol-Butadien-Kautschuke erfolgt insbesondere durch anionische Lösungspolymerisation, d.h. mittels eines Katalysators auf Alkali- oder Erdalkalimetallbasis in einem organischen Lösungsmittel.

Üblicherweise sind die polymerisierten Monomere und die unterschiedlichen Butadien-Konfigurationen statistisch im flüssigen Polybutadien-Copolymer verteilt. Auch Kautschuke mit blockartig aufgebauter Struktur, die als Integralkautschuk bezeichnet werden, fallen erfindungsgemäß unter die Definition von L-SBR (A) (K.-H. Nordsiek, K.-H. Kiepert, GAK Kautschuk Gummi Kunststoffe 33 (1980), no. 4, 251-255).

Unter L-SBR werden erfindungsgemäß sowohl lineare als auch verzweigte oder endgruppenmodifizierte Kautschuke verstanden. Beispielsweise sind derartige Typen in DE 2 034 989 A1 genannt. Als Verzweigungsmittel wird bevorzugt Siliciumtetrachlorid bzw. Zinntetrachlorid eingesetzt.

Unter E-SBR werden erfindungsgemäß Kautschuke verstanden, die durch radikalische Emulsionspolymerisation auf der Basis von Styrol und Butadien hergestellt werden. Der Gehalt an einpolymerisiertem Styrol liegt vorzugsweise im Bereich von 15 bis 40 Gew.-%. Je nach Polymerisationstemperatur unterscheidet man zwischen Warm- und Kaltpolymerisationsverfahren. Als Initiator werden Alkalipersulfate oder organische Peroxide mit Reduktionsmittel eingesetzt.

Die als flüssiges Polybutadien-Copolymer alternativ einzusetzenden Acrylnitril-1,3-Butadien-Copolymere werden auch als Acrylnitril-Butadien-Kautschuk NBR bezeichnet. NBR wird durch radikalische Copolymerisation von 1,3-Butadien und Acrylnitril in Masseverhältnissen von ca. 50 : 50 bis 85 : 15 gewonnen. Seine Herstellung erfolgt in wässriger Emulsion. Je nach Polymerisationstemperatur unterscheidet man zwischen Warm- und Kaltpolymerisationsverfahren. Als Initiator werden Alkalipersulfate oder organische Peroxide mit Reduktionsmittel eingesetzt (J. Schnetger "Lexikon der Kautschuktechnik" 3. Auflage, Hüthig Verlag Heidelberg, 2004, Seite 28-29, F. Röthemeyer, F. Sommer "Kautschuktechnologie", 2. Überarbeitete Auflage, Carl Hanser Verlag München Wien, 2006, Seite 107 bis 122, H.-G. Elias, "Macromolecules, Volume 2: Industrial Polymers and Syntheses", WILEY-VCH Verlag GmbH, Weinheim, 2007, S. 244 bis 245, H.-G. Elias, "Macromolecules, Volume 4: Applications of Polymers", WILEY-VCH Verlag GmbH, Weinheim, 2009, S. 275 bis 278).

Bei Raumtemperatur flüssige Polybutadien-Copolymere können generell über eine Synthese, das heißt einem Aufbau des Molekulargewichts, oder über einen Abbau ausgehend von einem Polybutadien-Copolymer mit einem höheren Molekulargewicht (Abbau von Molekulargewicht durch mechanisches Einbringen von hohen Scherkräften, vorzugsweise in Walzwerken, auch Mastikation genannt (J. Schnetger "Lexikon der Kautschuktechnik" 3. Auflage, Hüthig Verlag Heidelberg, 2004, Seite 1 bis 2, F. Röthemeyer, F. Sommer "Kautschuktechnologie", 2. Überarbeitete Auflage, Carl Hanser Verlag München Wien, 2006, Seite 358 bis 360, H.-G. Elias, "Macromolecules, Volume 2: Industrial Polymers and Syntheses", WILEY-VCH Verlag GmbH, Weinheim, 2007, S. 262), hergestellt werden. Synthetisch können erfindungsgemäß einzusetzende flüssige Polybutadien-Copolymere wie oben beschrieben über Emulsionspolymerisationsverfahren, Ziegler-Natta-Polymerisation, über anionische Polymerisation oder, insbesondere für Styrol-1,3-Butadien-Co-polymere, über radikalische Polymerisation in Lösung dargestellt werden (H.-G. Elias, "Macromolecules, Volume 2: Industrial Polymers and Syntheses", WILEY-VCH Verlag GmbH, Weinheim, 2007, S. 242 bis 245; H.-G. Elias, "Macromolecules, Volume 4: Applications of Polymers", WILEY-VCH Verlag GmbH, Weinheim, 2007, S. 284 bis 285).

Erfindungsgemäß einzusetzende bei RT flüssige SBRs werden beispielsweise von der Firma Cray Valley USA, LLC, Exton, PA, USA, als Ricon® angeboten, insbesondere Ricon® 181, ein flüssiges Styrol-1,3-Butadien-Copolymer mit einer dynamischen Viskosität bei 25 °C (DIN 53019, Kegel-Platte-Methode, Schergeschwindigkeit 50 1/s) von 14.600 mPas (bzw. einer Brookfield Viscosity analog ISO 2555, cps 17,500 ± 7,500 bei 25°C, Herstellerangabe) und mit einem zahlenmittleren Molekulargewicht Mn im Bereich um 3.200 g/mol (Herstellerangabe) (siehe Cray Valley USA, LLC, Butadiene Styrene Copolymer, Technical Data Sheet, Exton, PA, USA, 08.2010).

### Coagenz

In einer bevorzugten Ausführungsform wird das bei RT flüssige Polybutadien-Copolymer in der Polyamid Komponente des erfindungsgemäßen Verbundteils ohne zusätzliches Coagenz eingesetzt. Coagenzien werden zumeist für die peroxidische Vernetzung von Kautschuken eingesetzt und führen zu einer gesteigerten Vernetzungsausbeute. Chemisch sind Coagenzien mehrfach funktionelle Verbindungen, die mit Polymerradikalen reagieren und stabilere Radikale bilden (F. Röthemeyer, F. Sommer "Kautschuktechnologie", 2. Überarbeitete Auflage, Carl Hanser Verlag München Wien, 2006, Seite 315 bis 317; J. Schnetger "Lexikon der Kautschuktechnik" 3. Auflage, Hüthig Verlag Heidelberg, 2004, Seite 82 bis 83). In einer bevorzugten Ausführungsform zeichnet sich die Polyamid Komponente des erfindungsgemäßen Verbunds dadurch aus, dass sie kein Coagenz der Reihe Ethylenglycoldimethacrylat (EDMA), Trimethylolpropantrimethacrylat (TMPTMA, TRIM), Trimethylolpropantriacrylat (TMPTA), 1,6-Hexandioldiacrylat (HDDA), 1,6-Hexandioldimethacrylat (HDDMA), Butandioldimethacrylat, Zink-diacrylat, Zink-dimethacrylat, Triallylcyanurat (TAC), Triallylisocyanurat (TAIC), Diallylterephthalat, Triallyltrimellitat (TATM) oder N,N'-m-Phenylenbismaleimid (MPBM, HVA-2) enthält.

### Elastomer-Teilstück

Die im Elastomer-Teilstück des erfindungsgemäßen Verbundteils einzusetzenden mit elementarem Schwefel zu vulkanisierenden bzw. zu vernetzenden Kautschuke sind Elastomere, die durch einen Vulkanisationsprozess erhältlich sind. Unter Vulkanisation versteht man ein von Charles Goodyear entwickeltes chemisch-technisches Verfahren, bei dem Kautschuk unter Einfluss von Zeit, Temperatur, Druck und mittels geeigneter Vernetzungschemikalien gegen atmosphärische und chemische Einflüsse sowie gegen mechanische Beanspruchung widerstandsfähig gemacht wird.

Gemäß dem Stand der Technik werden zur Schwefel Vulkanisation eine Kautschukmischung, bestehend aus Rohkautschuk, Schwefel in Form von löslichem und/oder in Form von unlöslichem Schwefel und/oder Schwefel spendenden Stoffen, hierzu gehören beispielsweise die in der Gummiindustrie als Schwefelspender allgemein bekannten organischen Additive, sowie insbesondere Dischwefeldichlorid (S₂Cl₂), Katalysatoren, Hilfsstoffe und gegebenenfalls weitere Füllstoffe erhitzt. Als Additiv kann der Kautschuk Komponente wenigstens ein Vulkanisationsbeschleuniger beigefügt werden, der für die Schwefelvulkanisation geeignet ist.

Im Stand der Technik unterscheidet man fünf Schwefel basierte Vernetzungssysteme, die sich in der Menge des zugesetzten Schwefels bzw. Schwefelspenders und im Verhältnis von Schwefel bzw. Schwefelspender zu Vulkanisationsbeschleuniger unterscheiden.

Das sogenannte "konventionelle" Schwefelvernetzungssystem enthält 2,0 bis 3,5 phr Schwefel (phr = parts per hundred of rubber, d.h. Gew.-Teile bezogen auf 100 Gew.-Teile Kautschuk) und 0,5 bis 1,0 phr Beschleuniger. Beim sogenannten "Semi-EV" Vernetzungssystem (EV = efficient vulcanization) werden 1,0 bis 2,0 phr Schwefel und 1,0 bis 2,5 phr Beschleuniger eingesetzt. Das sogenannte "EV" Vernetzungssystem enthält 0,3 bis 1,0 phr Schwefel und 2,0 bis 6,0 phr Beschleuniger. Setzt man 0,3 bis 0,6 phr Schwefel, 3,0 bis 6,0 phr Beschleuniger und 0,0 bis 2,0 phr Schwefelspender ein, spricht man vom sogenannten "EV-schwefelarmen" Vernetzungssystem. Im fünften - nicht erfindungsgemäß - einzusetzenden Schwefel basierten Vernetzungssystem enthält das sogenannte "Schwefelspender-Vernetzungssystem" keinen elementaren Schwefel (0,0 phr), sondern es werden 0,0 bis 2,0 phr Beschleuniger und 1,0 bis 4,0 phr Schwefelspender eingesetzt. Die Schwefelspender, die im "Schwefelspender-Vernetzungssystem" verwendet werden, wirken als Vulkanisiermittel (F. Röthemeyer, F. Sommer "Kautschuktechnologie", 2. Überarbeitete Auflage, Carl Hanser Verlag München Wien, 2006, Seite 291 bis 295).

In einer Ausführungsform wird als Elastomer Komponente des erfindungsgemäßen Verbundteils ein mit elementarem Schwefel als Vernetzungsmittel zu vulkanisierender bzw. zu vernetzender Kautschuk in Gegenwart zusätzlich wenigstens eines Schwefelvernetzungssystems der Reihe konventionelles Schwefelvernetzungssystem, semi-EV-Vernetzungssystem, EV-Vernetzungssystem oder EV-schwefelarmes Vernetzungssystem eingesetzt.

In allen Fällen kann das Vernetzungssystem neben den sogenannten Hauptbeschleunigern unterschiedliche und gegebenenfalls auch mehrere sogenannte Zweitbeschleuniger enthalten. Deren Art, Dosierung und Kombination wird auf den jeweiligen Anwendungsfall abgestimmt und ist zusätzlich je Kautschuktyp verschieden. Beim Vulkanisationsprozess mit Schwefel werden die langkettigen Kautschukmoleküle durch Schwefelbrücken vernetzt. Hierdurch gehen die plastischen Eigenschaften des Kautschuks bzw. der Kautschukmischung verloren, der Stoff wird mittels des Verfahrens der Vulkanisation vom plastischen in einen elastischen Zustand überführt.

Das bei diesem Verfahren der Vulkanisation entstehende Elastomer, auch als Gummi bezeichnet, hat gegenüber dem Edukt dauerelastische Eigenschaften, kehrt bei mechanischer Beanspruchung jeweils wieder in seine Ursprungslage zurück, hat eine höhere Reißfestigkeit, Dehnung und Beständigkeit gegenüber Alterung und Witterungseinflüssen.

Die Elastizität einer Schwefel vernetzten Elastomer Komponente ist abhängig von der Anzahl der Schwefelbrücken. Je mehr Schwefelbrücken vorhanden sind, desto härter ist der Gummi. Die Anzahl und die Länge der Schwefelbrücken ist wiederum abhängig von der zugesetzten Schwefelmenge, der Art des Vernetzungssystems und der Dauer der Vulkanisation.

Die erfindungsgemäß im Verbundteil einzusetzende, aus mit elementarem Schwefel vernetztem bzw. vulkanisiertem Kautschuk erhältliche Elastomer Komponente, zeichnet sich durch die Gegenwart von C=C-Doppelbindungen aus.

Bei diesen C=C doppelbindungshaltigen Kautschuken handelt es sich bevorzugt um solche auf Basis von Dienen. Erfindungsgemäß besonders bevorzugt sind doppelbindungshaltige Kautschuke, die aus der technischen Herstellung kommend einen Gelanteil von kleiner 30%, bevorzugt kleiner 5%, insbesondere kleiner 3% aufweisen, und nach DIN/ISO 1629 als "R"-bzw. als "M" Kautschuke bezeichnet werden. Gelanteil im Sinne der vorliegenden Erfindung bedeutet den Anteil an nicht mehr löslichem, aber quellbaren dreidimensional vernetztem polymeren Material.

Erfindungsgemäß für das Elastomer Teilstück bevorzugte, mit elementarem Schwefel als Vernetzungsmittel zu vernetzende Kautschuke sind solche der Reihe Naturkautschuk (NR), Ethylen-Propylen-Dien Kautschuke (EPDM), Styrol/Butadienkautschuk (SBR), insbesondere E-SBR, Polybutadienkautschuk (BR), Polyisopren (IR), Butylkautschuk, insbesondere Isobuten/Isopren-Kautschuk (IIR), Halobutylkautschuk, insbesondere Chlor- oder Brombutylkautschuk (XIIR), Nitrilkautschuk (NBR), hydrierter Nitrilkautschuk (H-NBR), carboxylierter Butadien/Acrylnitril-Kautschuk (XNBR) oder Polychloropren (CR). Wenn die Möglichkeit besteht, Kautschuke durch mehrere Synthesewege zu erhalten, wie beispielsweise aus Emulsion oder aus Lösung, sind erfindungsgemäß immer alle Möglichkeiten gemeint. Die vorgenannten Kautschuke sind dem Fachmann hinreichend bekannt und von unterschiedlichsten Anbietern käuflich erhältlich.

Ferner können auch Mischungen von zwei oder mehr der zuvor genannten Kautschuke im Elastomer-Teilstück des erfindungsgemäßen Verbunds eingesetzt werden. Diese Mischungen werden auch als Polymerverschnitte von Kautschuken oder als Kautschukblends bezeichnet (J. Schnetger "Lexikon der Kautschuktechnik" 3. Auflage, Hüthig Verlag Heidelberg, 2004, Seite 375 bis 377). Bevorzugt im Elastomer-Teilstück des erfindungsgemäßen Verbunds einzusetzende Kautschukblends sind Mischungen aus NR als Matrixphase und BR als dispergierte Kautschukphase mit BR-Anteilen bis 50 phr und BR als Matrixphase und SBR oder CR als dispergierte Kautschukphase mit SBR- bzw. CR-Anteilen bis 50 phr.

Erfindungsgemäß insbesondere bevorzugt wird für das Elastomer-Teilstück als mit elementarem Schwefel zu vulkanisierender bzw. zu vernetzender Kautschuk wenigstens Naturkautschuk (NR) (CAS No. 9006-04-6) eingesetzt.

Der erfindungsgemäß insbesondere bevorzugte mit elementarem Schwefel zu vernetzende Naturkautschuk (NR) für das Elastomer-Teilstück im erfindungsgemäßen Verbund ist chemisch ein Polyisopren mit einem cis-1,4-Gehalt von > 99% bei mittleren Molekulargewichten von 2·10⁶ bis 3·10⁷ g/mol. NR wird auf biochemischen Weg synthetisiert, bevorzugt in der Plantagenpflanze Hevea Brasiliensis. Kommerziell erhältlich sind Naturkautschuke z.B. als Produkte aus der Produktreihe SMR (Standard Malaysian Rubber) von Pacidunia Sdn. Bhd. oder aus der Produktreihe SVR (Standard Vietnamese Rubber) von Phu An Imexco. Ltd. (J. Schnetger "Lexikon der Kautschuktechnik" 3. Auflage, Hüthig Verlag Heidelberg, 2004, Seite 331 bis 338).

Als mit elementarem Schwefel zu vernetzender Kautschuk wird in einer alternativ bevorzugten Ausführungsform für das Elastomer-Teilstück im erfindungsgemäßen Verbund EPDM Kautschuk (CAS No.25038-36-2) eingesetzt. Bei EPDM handelt es sich um Polymere, die durch Terpolymerisation von Ethylen und größeren Anteilen Propylen sowie einigen Gew.-% eines dritten Monomeren mit Dien-Struktur hergestellt werden. Das Dien-Monomer stellt dabei die Doppelbindungen für die sich anschließende Vulkanisation bereit. Als Dien-Monomere finden vorwiegend cis,cis-1,5-Cyclooctadien (COD), exo-Dicyclopentadien (DCP), endo-Dicyclopentadien (EDCP), 1,4-Hexadien (HX), 5-Ethyliden-2-norbornen (ENB) und auch Vinylnorbornen (VNB) Verwendung.

EPDM-Kautschuk wird in bekannter Weise durch Polymerisation eines Gemisches aus Ethen und Propen sowie einem Dien in Gegenwart von Ziegler-Natta-Katalysator-Systemen, wie z.B. Vanadiumverbindungen mit Organoaluminium-Cokatalysatoren, oder Metallocen-Katalysator-Systemen hergestellt (J. Schnetger "Lexikon der Kautschuktechnik" 3. Auflage, Hüthig Verlag Heidelberg, 2004, Seite 144 bis 146). In der Regel wird ein Gemisch aus mehr als 25 Gew.-% Ethen, mehr als 25 Gew.-% Propen und 1 bis 10 Gew.-%, vorzugsweise 1 bis 3 Gew.-% eines nicht konjugierten Diens wie Bicyclo-(2.2.1)-heptadien, 1,5-Hexadien, 1,4-Dicyclopentadien, 5-Ethylidennorbornen und auch Vinylnorbornen (VNB) polymerisiert.

EPDM Kautschuke für das Elastomer-Teilstück sind beispielsweise als Produkte aus der Produktreihe der Marke Keltan® von der Lanxess Deutschland GmbH erhältlich, oder aber auch nach den für den Fachmann geläufigen Methoden herstellbar.

Als mit elementarem Schwefel zu vernetzender Kautschuk für das Elastomer-Teilstück wird in einer alternativen bevorzugten Ausführungsform Styrol-Butadien-Kautschuk SBR (CAS No. 9003-55-8) für das Elastomer-Teilstück im erfindungsgemäßen Verbund eingesetzt. Unter SBR-Kautschuken werden Kautschuke auf Basis von Styrol und 1,3-Butadien verstanden und zwar sowohl Lösungs-SBR-Kautschuke, abgekürzt als "L-SBR", als auch Emulsions-SBR-Kautschuke, abgekürzt als E-SBR (J. Schnetger "Lexikon der Kautschuktechnik" 3. Auflage, Hüthig Verlag Heidelberg, 2004, Seite 508 bis 512, F. Röthemeyer, F. Sommer "Kautschuktechnologie", 2. Überarbeitete Auflage, Carl Hanser Verlag München Wien, 2006, Seite 93 bis 107, H.-G. Elias, "Macromolecules, Volume 2: Industrial Polymers and Syntheses", WILEY-VCH Verlag GmbH, Weinheim, 2007, S. 243 bis 244, H.-G. Elias, "Macromolecules, Volume 4: Applications of Polymers", WILEY-VCH Verlag GmbH, Weinheim, 2009, S. 275 bis 278).

Unter L-SBR für für das Elastomer-Teilstück versteht man Kautschuke, die in einem Lösungsprozess auf der Basis von Styrol und 1,3-Butadien hergestellt werden. Der Gehalt an einpolymerisiertem Styrol liegt bevorzugt im Bereich von 5 bis 50 Gew.-%, besonders bevorzugt im Bereich von 10 bis 40 Gew.-%. Der Gehalt an einpolymerisierten Butadien liegt vorzugsweise im Bereich von 50 bis 95 Gew.-%, besonders bevorzugt im Bereich von 60 bis 90 Gew.-%. Der Gehalt an Vinylgruppen im einpolymerisierten Butadien liegt vorzugsweise im Bereich von 10 bis 90 Gew.-%, der Gehalt an 1,4-trans-ständigen Doppelbindungen liegt vorzugsweise im Bereich von 20 bis 80 Gew.-% und der Gehalt an 1,4-cis-ständigen Doppelbindungen ist komplementär zur Summe aus Vinylgruppen und 1,4-trans-ständigen Doppelbindungen. Die Herstellung dieser Styrol-Butadien-Kautschuke erfolgt insbesondere durch anionische Lösungspolymerisation, d.h. mittels eines Katalysators auf Alkali- oder Erdalkalimetallbasis in einem organischen Lösungsmittel.

Üblicherweise sind die polymerisierten Monomere und die unterschiedlichen Butadien-Konfigurationen statistisch im Polymer für das Elastomer-Teilstück verteilt. Auch Kautschuke mit blockartig aufgebauter Struktur, die als Integralkautschuk bezeichnet werden, sollen erfindungsgemäß unter die Definition von L-SBR (A) fallen (K.-H. Nordsiek, K.-H. Kiepert, GAK Kautschuk Gummi Kunststoffe 33 (1980), no. 4, 251-255) fallen.

Unter L-SBR für das Elastomer-Teilstück sollen erfindungsgemäß sowohl lineare als auch verzweigte oder endgruppenmodifizierte Kautschuke verstanden werden. Beispielsweise sind derartige Typen in DE 2 034 989 A1 genannt. Als Verzweigungsmittel wird bevorzugt Siliciumtetrachlorid bzw. Zinntetrachlorid eingesetzt.

Unter E-SBR für das Elastomer-Teilstück versteht man Kautschuke, die durch radikalische Emulsionspolymerisation auf der Basis von Styrol und Butadien hergestellt werden. Der Gehalt an einpolymerisiertem Styrol liegt vorzugsweise im Bereich von 15 bis 40 Gew.-%. Je nach Polymerisationstemperatur unterscheidet man zwischen Warm- und Kaltpolymerisationsverfahren. Als Initiator werden Alkalipersulfate oder organische Peroxide mit Reduktionsmittel eingesetzt. Die aus dem Polymerisationsprozess resultierenden Emulsionen werden für den Einsatz zum Festkautschuk aufgearbeitet.

Sowohl E-SBR als auch L-SBR können in den Elastomer-Komponenten für das Elastomer-Teilstück im erfindungsgemäßen Verbund auch in ölverstreckter Form eingesetzt werden. Ölverstreckt im Sinne der vorliegenden Erfindung bedeutet, dass Öle im Herstellprozess in den Kautschuk eingemischt werden. Die Oele dienen als Weichmacher. Anwendung finden dabei dem Fachmann bekannte und industrieübliche Öle. Bevorzugt sind solche, die wenig bis keine polyaromatischen Kohlenwasserstoffe enthalten. Geeignet sind TDAE (Treated Distillate Aromatic Extract), MES (Mild Extraction Solvate) und naphthenische Öle.

Als mit elementarem Schwefel zu vernetzender Kautschuk wird in einer alternativen bevorzugten Ausführungsform für das Elastomer-Teilstück im erfindungsgemäßen Verbund Polybutadien (BR) (CAS-No.9003-17-2) eingesetzt. Polybutadien (BR) umfasst insbesondere zwei unterschiedliche Polybutadien-Typklassen. Die erste Klasse weist einen 1,4-cis-Gehalt von mindestens 90 % auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt (Houben-Weyl, Methoden der Organischen Chemie, Thieme Verlag, Stuttgart, 1987, Band E 20, Seiten 798 bis 812; Ullmann's Encyclopedia of Industrial Chemistry, Vol A 23, Rubber 3. Synthetic, VCH Verlagsgesellschaft mbH, D-69451 Weinheim, 1993, S. 239-364). Die Glastemperatur dieser Polybutadiene liegt bevorzugt bei ≤ -90°C (bestimmt mittels DSC).

Die zweite Polybutadien-Typklasse wird mit Li-Katalysatoren hergestellt und weist Vinylgehalte von 10% bis 80% auf. Die Glastemperaturen dieser Polybutadien-Kautschuke liegen im Bereich von -90 °C bis +20 °C (bestimmt mittels DSC).

Als mit elementarem Schwefel zu vernetzender Kautschuk wird in einer alternativen bevorzugten Ausführungsform für das Elastomer-Teilstück im erfindungsgemäßen Verbund Polyisopren (IR) eingesetzt. Polyisopren (CAS No. 9003-31-0) oder Isopren-Kautschuk ist die künstliche produzierte Variante des Naturkautschukes. Sie unterscheidet sich von diesem in erster Linie durch die geringere chemische Reinheit. Dies liegt daran, dass die zur Polymerisation eingesetzten Katalysatoren eine geringere Effektivität besitzen, als die in der Natur vorkommenden Enzyme. Die Reinheit von Naturkautschuk (NR) liegt bei mehr als 99,9 %, wohingegen sie bei den künstlich hergestellten IR - je nach eingesetztem Katalysator - nur etwa 92-97 % erreicht. Polyisopren (IR) hat typischerweise einen 1,4-cis-Gehalt von mindestens 70%. Synthetisch wird IR sowohl mittels Lithium- als auch mit Hilfe von Ziegler/Natta-Katalysatoren hergestellt, vorzugsweise mit Titan- und Neodymkatalysatoren (Houben-Weyl, Methoden der Organischen Chemie, Thieme Verlag, Stuttgart, 1987, Band E 20, Seiten 822 bis 840; Ullmann's Encyclopedia of Industrial Chemistry, Vol. A 23, Rubber 3. Synthetic, VCH Verlagsgesellschaft mbH, D-69451 Weinheim, 1993, S. 239-364).

Auch 3,4-Polyisopren, das Glastemperaturen im Bereich von -20 bis +30 °C aufweist, fällt unter IR.

Als mit elementarem Schwefel zu vernetzender Kautschuk wird in einer alternativen bevorzugten Ausführungsform für das Elastomer-Teilstück im erfindungsgemäßen Verbund Acrylnitril-Butadien-Kautschuk (NBR) eingesetzt. NBR (CAS No. 9003-18-3) wird durch radikalische Copolymerisation von 1,3-Butadien und Acrylnitril in Masseverhältnissen von ca. 50 : 50 bis 85 : 15 gewonnen. Seine Herstellung erfolgt in wässriger Emulsion. Je nach Polymerisationstemperatur unterscheidet man zwischen Warm- und Kaltpolymerisationsverfahren. Als Initiator werden Alkalipersulfate oder organische Peroxide mit Reduktionsmittel eingesetzt. Die aus dem Polymerisationsprozess resultierenden Emulsionen werden für den Einsatz zum Festkautschuk aufgearbeitet (J. Schnetger "Lexikon der Kautschuktechnik" 3. Auflage, Hüthig Verlag Heidelberg, 2004, Seite 28-29, F. Röthemeyer, F. Sommer "Kautschuktechnologie", 2. Überarbeitete Auflage, Carl Hanser Verlag München Wien, 2006, Seite 107 bis 122, H.-G. Elias, "Macromolecules, Volume 2: Industrial Polymers and Syntheses", WILEY-VCH Verlag GmbH, Weinheim, 2007, S. 244 bis 245, H.-G. Elias, "Macromolecules, Volume 4: Applications of Polymers", WILEY-VCH Verlag GmbH, Weinheim, 2009, S. 275 bis 278).

Als mit elementarem Schwefel zu vernetzender Kautschuk wird in einer alternativen bevorzugten Ausführungsform für das Elastomer-Teilstück im erfindungsgemäßen Verbund hydrierter Nitrilkautschuk (H-NBR) eingesetzt. H-NBR (CAS No. 308068-83-9) wird über vollständige oder partielle Hydrierung von NBR in nicht-wässriger Lösung unter Einsatz spezieller Katalysatoren (z.B. Pydridin-Cobalt-Komplexe oder Rhodium-, Ruthenium-, Iridium- oder Palladium-Komplexe) hergestellt (J. Schnetger "Lexikon der Kautschuktechnik" 3. Auflage, Hüthig Verlag Heidelberg, 2004, Seite 30).

Als mit elementarem Schwefel zu vernetzender Kautschuk wird in einer alternativen bevorzugten Ausführungsform für das Elastomer-Teilstück im erfindungsgemäßen Verbund carboxylierter Butadien/Acrylnitril-Kautschuk (XNBR) eingesetzt. XNBR wird über Terpolymerisation von Butadien, Acrylnitril und Acrylsäure bzw. Methacrylsäure hergestellt. Der Anteil der Carbonsäure liegt im Bereich von 1 bis 7 Gew.-% (F. Röthemeyer, F. Sommer "Kautschuktechnologie", 2. überarbeitete Auflage, Carl Hanser Verlag München Wien, 2006, Seite 112). XNBR ist beispielsweise als Krynac® X 740 bei der Lanxess Deutschland GmbH, Köln, erhältlich.

Als mit elementarem Schwefel zu vernetzender Kautschuk wird in einer alternativen bevorzugten Ausführungsform für das Elastomer-Teilstück im erfindungsgemäßen Verbund Butylkautschuk (IIR), insbesondere Isobuten/Isopren-Kautschuk, eingesetzt (CAS No. 9010-85-9). Butylkautschuk wird über eine Copolymerisation aus Isorpren und Isobutylen hergestellt (J. Schnetger "Lexikon der Kautschuktechnik" 3. Auflage, Hüthig Verlag Heidelberg, 2004, Seite 69 bis 71).

Als mit elementarem Schwefel zu vernetzender Kautschuk wird in einer alternativen bevorzugten Ausführungsform für das Elastomer-Teilstück im erfindungsgemäßen Verbund Halobutylkautschuk (XIIR), insbesondere Chlor- (CIIR) oder Brombutylkautschuk (BIIR), (CAS No. 68441-14-5) eingesetzt. Chlorbutylkautschuk (CIIR) (CAS No.68081-82-3) wird durch Einleiten von Chlorgas in eine Butylkautschuklösung hergestellt (J. Schnetger "Lexikon der Kautschuktechnik" 3. Auflage, Hüthig Verlag Heidelberg, 2004, Seite 75). Brombutylkautschuk (BIIR) wird durch Behandlung von Butylkautschuk in Lösung mit Brom hergestellt (J. Schnetger "Lexikon der Kautschuktechnik" 3. Auflage, Hüthig Verlag Heidelberg, 2004, Seite 66 bis 67).

Als mit elementarem Schwefel zu vernetzender Kautschuk wird in einer alternativen bevorzugten Ausführungsform für das Elastomer-Teilstück im erfindungsgemäßen Verbund Polychloropren (CR) eingesetzt. Polychloropren (CAS No. 9010-98-4) wird aus Chloropren (2-Chlor-1,3-butadien), gegebenenfalls in Anwesenheit von Dichlorbutadien oder Schwefel als Comonomere, in einer Emulsionspolymerisation hergestellt. Durch Verwendung spezieller Regler wie Mercaptane, z.B. n-Dodecylmercaptan, oder Xanthogendisulfid während der Polymerisation können sogenannte Mercaptan-CR-Typen bzw. Xanthogendisulfid-CR-Typen hergestellt werden, die mit Metalloxiden, Vulkanisationsbeschleunigern und Schwefel vernetzt werden können. Hierbei können spezielle Beschleunigersysteme, insbesondere Thioharnstoffe (ETU, DBTU, TBTU, DETU, MTT) eingesetzt werden (J. Schnetger "Lexikon der Kautschuktechnik" 3. Auflage, Hüthig Verlag Heidelberg, 2004, Seite 78 bis 81; F. Röthemeyer, F. Sommer "Kautschuktechnologie", 2. überarbeitete Auflage, Carl Hanser Verlag München Wien, 2006, Seite 15 bis 163).

Bevorzugt wird als mit elementarem Schwefel zu vernetzender Kautschuk für das Elastomer-Teilstück im erfindungsgemäßen Verbund wenigstens einer aus der Gruppe Naturkautschuk (NR), Ethylen-Propylen-Dien Kautschuke (EPDM), Styrol-Butadien-Kautschuk (SBR), insbesondere E-SBR, Polybutadienkautschuk (BR), Polyisopren (IR), Butylkautschuk, insbesondere Isobuten/Isopren-Kautschuk (IIR), Halobutylkautschuk (XIIR), insbesondere Chlor- oder Brombutylkautschuk, Acrylnitril-Butadien-Kautschuk (NBR), hydrierter Nitrilkautschuk (H-NBR), carboxylierter Butadien/Acrylnitril-Kautschuk (XNBR) und Polychloropren (CR) oder Mischungen von zwei oder mehr der zuvor genannten Kautschuke eingesetzt.

Besonders bevorzugt wird als mit elementarem Schwefel zu vernetzender Kautschuk für das Elastomer-Teilstück im erfindungsgemäßen Verbund wenigstens ein Kautschuk aus der Gruppe Naturkautschuk (NR), Ethylen-Propylen-Dien Kautschuk (EPDM), Styrol/Butadien-Kautschuk (SBR), carboxylierter Butadien/Acrylnitril-Kautschuk (XNBR), Polychloropren (CR), Nitrilkautschuk (NBR) und Polybutadien (BR) oder Mischungen von zwei oder mehr der zuvor genannten Kautschuke eingesetzt.

Ganz besonders bevorzugt wird als mit elementarem Schwefel zu vernetzender Kautschuk für das Elastomer-Teilstück im erfindungsgemäßen Verbund wenigstens ein Kautschuk aus der Gruppe Naturkautschuk (NR), Ethylen-Propylen-Dien Kautschuk (EPDM), Styrol/Butadien-Kautschuk (SBR), carboxylierter Butadien/Acrylnitril-Kautschuk (XNBR) und Polybutadien (BR) oder Mischungen von zwei oder mehr der zuvor genannten Kautschuke eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Naturkautschuk (NR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Ethylen-Propylen-Dien Kautschuk (EPDM) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Styrol/Butadien-Kautschuk (SBR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Polybutadien (BR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Polyisopren (IR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Butylkautschuk (IIR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Halobutylkautschuk (XIIR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Nitrilkautschuk (NBR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk hydrierter Nitrilkautschuk (H-NBR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk carboxylierter Butadien/Acrylnitril-Kautschuk (XNBR) eingesetzt.

In einer ganz besonders bevorzugten Ausführungsform der vorliegenden Erfindung wird für das Elastomer-Teilstück im erfindungsgemäßen Verbund als mit elementarem Schwefel zu vernetzender Kautschuk Polychloropren (CR) eingesetzt.

Die für das Elastomer-Teilstück einzusetzenden Kautschuke liegen in einer Ausführungsform der vorliegenden Erfindung in unfunktionalisierter Form vor. In alternativen Ausführungsformen der vorliegenden Erfindung kann die Verbundhaftung weiter verbessert werden, wenn der Kautschuk funktionalisiert wird, insbesondere durch Einbringen von Hydroxylgruppen, Carboxylgruppen oder Säureanhydridgruppen.

### Elementarer Schwefel

Erfindungsgemäß wird dem Kautschuk für das Elastomer-Teilstück im erfindungsgemäßen Verbund als Vernetzer/Vulkanisator elementarer Schwefel (CAS No. 7704-34-9) beigefügt. Dieser wird entweder als löslicher oder unlöslicher Schwefel, bevorzugt als löslicher Schwefel, eingesetzt.

Unter löslichem Schwefel versteht man die bei gewöhnlichen Temperaturen einzige stabile Form, den gelben Cyclooctaschwefel, auch als S₈-Schwefel oder α-Schwefel bezeichnet, die aus typischen rhombischen Kristallen besteht und in Schwefelkohlenstoff löslich ist. So lösen sich bei 25 °C in 100 g CS₂ 30 g α-S (Stichwort "Schwefel" des Online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 - 95 % in Schwefelkohlenstoff unlöslich.

In einer alternativen bevorzugten Ausführungsform wird zusätzlich zum elementaren Schwefel dem Kautschuk des Elastomer-Teilstücks des erfindungsgemäßen Verbunds wenigstens ein sogenannter Schwefelspender zugesetzt. Diese zusätzlich einzusetzenden Schwefelspender können über eine Beschleunigerwirkung in Bezug auf die Vulkanisation verfügen, oder nicht. Bevorzugt einzusetzende Schwefelspender ohne Beschleunigerwirkung sind Dithiomorpholin (DTDM) oder Caprolactamdisulfid (CLD). Bevorzugt einzusetzende Schwefelspender mit Beschleunigerwirkung sind 2-(4-Morpholinodithio)benzothiazol (MBSS), Tetramethylthiuramdisulfid (TMTD), Tetraethylthiuramdisulfid (TETD) oder Dipentamethylenthiuramtetrasulfid (DPTT) (J. Schnetger "Lexikon der Kautschuktechnik" 3. Auflage, Hüthig Verlag Heidelberg, 2004, Seite 472 oder F. Röthemeyer, F. Sommer "Kautschuktechnologie", 2. überarbeitete Auflage, Carl Hanser Verlag München Wien, 2006, Seite 309 bis 310).

Elementarer Schwefel und in bevorzugten Ausführungsformen gegebenenfalls zusätzlich einzusetzender Schwefelspender werden in der für das Elastomer-Teilstück im erfindungsgemäßen Verbund einzusetzenden Kautschukmischung bevorzugt in einer Gesamtmenge im Bereich von 0,1 bis 15 Gew.-Teilen, besonders bevorzugt 0,1 bis 10 Gew.-Teilen, bezogen auf 100 Gew.-Teile des Kautschuks der Elastomer Komponente eingesetzt. Werden zwei oder mehrere Kautschuke als Elastomer Komponente im Elastomer-Teilstück des erfindungsgemäßen Verbunds eingesetzt, so dient die Summe aller Kautschuke als Basis für die vorgenannten Angaben in Gew.-Teilen. Dies gilt im Folgenden auch für alle anderen Mengenangaben für die übrigen Komponenten einer erfindungsgemäß einzusetzenden Elastomer Komponente zur Herstellung eines erfindungsgemäßen Verbunds.

In einer erfindungsgemäß bevorzugten Ausführungsform kann dem Kautschuk im Elastomer-Teilstück des erfindungsgemäßen Verbunds als Additiv wenigstens ein Vulkanisationsbeschleuniger beigefügt werden, der für die Schwefelvulkanisation mit elementarem Schwefel geeignet ist. Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Erfindungsgemäß bevorzugte Vulkanisationsbeschleuniger sind Xanthogenate, Dithiocarbamate, Tetramethylthiuramdisulfide, Thiurame, Thiazole, Thioharnstoff-Derivate, Amin-Derivate wie Tetramine, Sulfenimide, Piperazine, Amincarbamate, Sulfenamide, Dithiophosphorsäure-Derivate, Bisphenol- oder Triazin-Derivate.

Erfindungsgemäß besonders bevorzugte Vulkanisationsbeschleuniger sind Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalze (ZMBT), Kupfer-dimethyldithiocarbamat (CDMC), Benzothiazyl-2-sulfenmorpholid (MBS), Benzothiazyldicyclohexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipentamethylenthiuramtetrasulfid (DPTT), Tetra-iso-butylthiuramdisulfid (IBTD), Tetraethylthiuramdisulfid (TETD), Tetramethylthiuramdisulfid (TMTD), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyl-dithiocarbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylen-thioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methylpiperazin); Hexamethylendiamincarbamat (HMDAC); Benzothiazyl-2-tert.-butylsulfenamid (TOBS), N,N'-Diethylthiocarbamyl-N'-cyclohexylsulfenamid (DETCS), N-Oxidiethylen-dithiocarbamyl-N'-oxydiethylensulfenamid (OTOS), 4,4'-Dihydroxydiphenylsulfon (Bisphenol S), Zn-isopropylxanthogenat (ZIX), Selen-, Tellur-, Blei, Kupfer- und Erdalkalisalze von Dithiocarbaminsäuren; Pentamethylenammonium-N-pentamethylendithiocarbamat; Dithiophosphorsäurederivate; Cyclohexylethylamin; Dibutylamin; Polyethylenpolyamine oder Polyethylenpolyimine, insbesondere Triethylentetramin (TETA).

Die Vulkanisationsbeschleuniger werden bevorzugt in einer Menge im Bereich von 0,1 bis 15 Gew.-Teilen, besonders bevorzugt in einer Menge im Bereich von 0,1 bis 10 Gew.-Teilen, bezogen auf 100 Gew.-Teile des Kautschuks der Elastomer Komponente im Elastomer-Teilstück des erfindungsgemäßen Verbunds eingesetzt.

In einer erfindungsgemäß bevorzugten Ausführungsform wird dem Kautschuk in der Elastomer Komponente des Elastomer-Teilstücks des erfindungsgemäßen Verbunds als Additiv Zinkoxid und Stearinsäure oder Zinkoxid und 2-Ethylhexansäure oder Zinkstearat beigefügt. Der Einsatz des Zinkoxids erfolgt als Aktivator für die Schwefelvulkanisation. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen und damit zu einer verbesserten Alterungsbeständigkeit der Kautschuk Komponente. Im Falle des Einsatzes von Zinkoxid enthält die erfindungsgemäße Kautschuk Komponente ferner Stearinsäure (Octadecansäure). Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion der Vulkanisationsbeschleuniger in der Elastomer Komponente führt. Ferner kommt es zu einer Komplexbildung mit Zinkionen im Rahmen der Schwefelvulkanisation. Als Alternative zur Stearinsäure kann auch 2-Ethylhexansäure eingesetzt werden.

Bevorzugt wird Zinkoxid (CAS No. 1314-13-2) in einer Menge im Bereich von 0,5 bis 15 Gew.-Teilen, besonders bevorzugt in eriner Menge im Bereich von 1 bis 7,5 Gew.-Teilen, ganz besonders bevorzugt in einer Menge im Bereich von 1 bis 5 Gew.-Teilen, bezogen auf 100 Gew.-Teile des Kautschuks in der Elsatomer Komponente des Elastomer-Teilstücks, eingesetzt.

Bevorzugt wird Stearinsäure (CAS No. 57-11-4) bzw. 2-Ethylhexansäure (CAS No. 149-57-5) in einer Menge im Bereich von 0,1 bis 7 Gew.-Teilen, besonders bevorzugt in einer Menge im Bereich von 0,25 bis 7 Gew.-Teilen, ganz besonders bevorzugt in einer Menge im Bereich von 0,5 bis 5 Gew.-Teilen, bezogen auf 100 Gew.-Teile des Kautschuks in der Elastomer Komponente des Elastomer-Teilstücks, eingesetzt.

Alternativ oder aber auch zusätzlich zur Kombination aus Zinkoxid und Stearinsäure kann in einer bevorzugten Ausführungsform Zinkstearat (CAS No. 557-05-1) eingesetzt werden. In diesem Fall wird üblicherweise eine Menge im Bereich von 0,25 bis 5 Gew.-Teilen, besonders bevorzugt eine Menge im Bereich von 1 bis 3 Gew.-Teilen, jeweils bezogen auf 100 Gew.-Teile des Kautschuks in der Elastomer Komponente des Elastomer-Teilstücks, eingesetzt. Als Alternative zum Zinkstearat kann auch das Zinksalz der 2-Ethylhexansäure eingesetzt werden.

In einer alternativen bevorzugten Ausführungsform kann neben elementarem Schwefel die Vernetzung des wenigstens einen Kautschuks in der Elastomer Komponente des Elastomer-Teilstücks des erfindungsgemäßen Verbunds auch als gemischte Schwefel-Peroxid-Vernetzung durchgeführt werden.

Darüber hinaus enthält die Elastomer Komponente für das Elastomer-Teilstück im erfindungsgemäßen Verbund in einer bevorzugten Ausführungsform wenigstens eine weitere Komponente der Reihe Füllstoffe, Mastiziermittel, Weichmacher, Verarbeitungswirkstoffe, Alterungs-, UV- oder Ozonschutzmittel, Klebrigmacher, Pigmente oder Farbstoffe, Treibmittel, Flammschutzmittel, Formtrennmittel, Festigkeitsträger und Haftungssysteme.

Im Falle des Einsatzes von Füllstoffen in der Elastomer Komponente für das Elastomer Teilstück im erfindungsgemäßen Verbund wird bevorzugt wenigstens ein Füllstoff der Reihe Kieselsäure, Ruß, Silikate, Oxide oder organische Füllstoffe eingesetzt, insbesondere Kieselsäure und/oder Ruß.

Kieselsäure (CAS No. 7631-86-9) oder "Silica" (Ullmann's Encyclopedia of Industrial Chemistry, VCH Verlagsgesellschaft mbH, D-69451 Weinheim, 1993, "Silica", S.635-645), wird insbesondere als pyrogene Kieselsäure (ibid. S. 635-642) oder als gefällte Kieselsäure (ibid. 642-645) eingesetzt, wobei erfindungsgemäß die gefällte Kieselsäure bevorzugt wird. Die gefällten Kieselsäuren haben eine spezifische Oberfläche von 5 bis 1000 m²/g bestimmt nach BET, vorzugsweise eine spezifische Oberfläche von 20 bis 400 m²/g. Sie werden durch Behandlung von Wasserglas mit anorganischen Säuren erhalten, wobei vorzugsweise Schwefelsäure eingesetzt wird. Die Kieselsäuren können in einer Ausführungsform auch als Mischoxide mit anderen Metalloxiden, wie Al-, Mg-, Ca-, Ba-, Zn-, Zr-, Ti-Oxiden vorliegen. Erfindungsgemäß bevorzugt werden Kieselsäuren mit spezifischen Oberflächen von 5 bis 1000 m²/g, bevorzugter 20 bis 400 m²/g, jeweils bestimmt nach BET analog DIN ISO 9277:2003-05, eingesetzt.

Die in einer Ausführungsform als Füllstoffe in der Elastomer Komponente für das Elastomer-Teilstück im erfindungsgemäßen Verbundteil einzusetzenden Ruße (CAS No. 1333-36-4) sind dem Fachmann ebenfalls bekannt (siehe Stichworte "carbon" bzw. "carbon black" in Ullmann's Encyclopedia of Industrial Chemistry, VCH Verlagsgesellschaft mbH, D-69451 Weinheim, 1993, vol A 5 S.95-158). Sie werden bevorzugt nach dem gas black-, furnace black-, lamp black- und thermal black-Verfahren hergestellt und werden nach der neuen ASTM-Nomenklatur (ASTM D 1765 und D 2516) als N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N642, N 650, N 660, N 683, N 754, N 762, N 765, N 772, N 774, N 787, N 907, N 908 N 990, N 991 S 3 etc. bezeichnet. Als Füllstoff einzusetzende Ruße besitzen bevorzugt BET-Oberflächen im Bereich von 5 bis 200 m²/g, bestimmt analog zu DIN ISO 9277:2003-05.

Bevorzugte weitere Füllstoffe, die in der Elastomer Komponente für das Elastomer-Teilstück im erfindungsgemäßen Verbundteil eingesetzt werden können, sind solche aus der Gruppe der synthetischen Silikate, insbesondere Aluminiumsilikat, der Erdalkalisilikate, insbesondere Magnesiumsilikat oder Calciumsilikat, bevorzugt jeweils mit BET-Oberflächen bestimmt in Analogie zu DIN ISO 9277:2003-05 im Bereich von 20 bis 400 m²/g und Primärteilchendurchmessern im Bereich von 5 bis 400 nm, natürliche Silikate, insbesondere Kaolin oder Kieselgur und andere natürlich vorkommende Kieselsäuren, der Metalloxide, insbesondere Aluminiumoxid, Magnesiumoxid, Calciumoxid, der Metallcarbonate, insbesondere Calciumcarbonat, Magnesiumcarbonat, Zinkcarbonat, der Metallsulfate, insbesondere Calciumsulfat, Bariumsulfat, der Metallhydroxide, insbesondere Aluminiumhydroxid oder Magnesiumhydroxid, der Glasfasern oder Glasfaserprodukte (Latten, Stränge oder Mikroglaskugeln), der Thermoplaste, insbesondere Polyamid, Polyester, Aramid, Polycarbonat, syndiotaktisches 1,2 Polybutadien oder trans-1,4-Polybutadien, sowie Cellulose, Cellulosederivate oder Stärke.

Im Falle des Einsatzes von zusätzlichen Mastiziermitteln in der Elastomer Komponente für das Elastomer-Teilstück im erfindungsgemäßen Verbund wird bevorzugt wenigstens ein Mastiziermittel der Reihe Thiophenole, Thiophenolzinksalze, substituierte aromatische Disulfide, Peroxide, Thiocarbonsäure-Derivate, Nitrosoverbindungen, Hydrazinderivate, Porofore (Treibmittel) oder Metallkomplexe, insbesondere Eisenhemiporphyrazin, Eisenphthalocyanin, Eisenacetonylacetat oder dessen Zinksalz eingesetzt (J. Schnetger "Lexikon der Kautschuktechnik" 3. Auflage, Hüthig Verlag Heidelberg, 2004, Seite 1 bis 2). Die Funktionsweise der Mastiziermittel wird in EP 0 603 611 A1 beschrieben.

Im Falle des Einsatzes von zusätzlichen Weichmachern in der Elastomer Komponente für das Elastomer-Teilstück im erfindungsgemäßen Verbund wird bevorzugt wenigstens ein Weichmacher der Reihe paraffinische Mineralöle, naphthenische Mineralöle, aromatische Mineralöle, aliphatische Ester, aromatische Ester, Polyester, Phosphate, Ether, Thioether, natürliche Fette oder natürliche Öle eingesetzt (F.Röthemeyer, F.Sommer "Kautschuktechnologie", 2. überarbeitete Auflage, Carl Hanser Verlag München Wien, 2006, Seite 329 bis 337).

Im Falle des Einsatzes von zusätzlichen Verarbeitungswirkstoffen in der Elastomer Komponente für das Elastomer-Teilstück im erfindungsgemäßen Verbund wird bevorzugt wenigstens ein Verarbeitungswirkstoff aus der Gruppe Fettsäuren, Fettsäure-Derivate, Fettsäureester, Fettalkohole und Faktis eingesetzt (F. Röthemeyer, F. Sommer "Kautschuktechnologie", 2. überarbeitete Auflage, Carl Hanser Verlag München Wien, 2006, Seite 337 bis 338). Faktis, auch bekannt als Ölkautschuk, ist ein gummiartiger Werkstoff, der durch Vernetzung ungesättigter Mineral- und Pflanzenöle, in Europa vor allem von Raps-, Rüb- oder Rizinusöl sowie in Amerika zusätzlich von Sojaöl, entsteht. Siehe hierzu auch http://de.wikipedia.org/wiki/Faktis.

Im Falle des Einsatzes von zusätzlichen Alterungs-, UV- und Ozonschutzmitteln in der Elastomer Komponente des Elastomer-Teilstücks im Verbundteil wird bevorzugt wenigstens ein Alterungs-, UV- und Ozonschutzmittel aus der Gruppe UV-Stabilisatoren, insbesondere Ruß - sofern nicht bereits als Füllstoff eingesetzt - oder Titandioxid, Ozonschutzwachse, Hydroperoxide zersetzende Additive (Tris-nonylphenyl-phosphit), Schwermetall-Stabilisatoren, substituierte Phenole, Diarylamine, substituierte p-Phenylendiamine, heterozyklische Mercaptoverbindungen, Paraffinwachse, mikrokristalline Wachse und Paraphenylendiamine eingesetzt (F. Röthemeyer, F. Sommer "Kautschuktechnologie", 2. überarbeitete Auflage, Carl Hanser Verlag München Wien, 2006, Seite 338 bis 344).

Im Falle des Einsatzes von zusätzlichen Klebrigmacher-Harzen in der Elastomer Komponente des Elastomer-Teilstücks im Verbundteil wird bevorzugt wenigstens ein Klebrigmacher-Harz aus der Gruppe Naturharz, Kohlenwasserstoffharz und Phenolharz eingesetzt (F. Röthemeyer, F. Sommer "Kautschuktechnologie", 2. überarbeitete Auflage, Carl Hanser Verlag München Wien, 2006, Seite 345 bis 346).

Im Falle des Einsatzes von zusätzlichen Pigmenten und Farbstoffen in der Elastomer Komponente des Elastomer-Teilstücks im erfindungsgemäßen Verbund wird bevorzugt wenigstens ein Pigment oder Farbstoff aus der Gruppe Titandioxid -sofern nicht bereits als UV-Schutzmittel eingesetzt-, Lithopone, Zinkoxid, Eisenoxid, Ultramarinblau, Chromoxid, Antimonsulfid und organische Farbstoffe eingesetzt (F. Röthemeyer, F. Sommer "Kautschuktechnologie", 2. Überarbeitete Auflage, Carl Hanser Verlag München Wien, 2006, Seite 345).

Im Falle des Einsatzes von zusätzlichen Treibmitteln in der Elastomer Komponente des Elastomer-Teilstücks im erfindungsgemäßen Verbund wird bevorzugt wenigstens ein Treibmittel aus der Gruppe Benzolsulfohydrazid, Dinitrosopentamethylentretramin und Azodicarbonamid eingesetzt (F. Röthemeyer, F. Sommer "Kautschuktechnologie", 2. überarbeitete Auflage, Carl Hanser Verlag München Wien, 2006, Seite 346).

Im Falle des Einsatzes von zusätzlichen Flammschutzmitteln in der Elastomer Komponente des Elastomer-Teilstücks im erfindungsgemäßen Verbund wird bevorzugt wenigstens ein Flammschutzmittel aus der Gruppe Aluminiumoxidhydrat, halogenierte Flammschutzmittel und phosphorhaltige Flammschutzmittel eingesetzt (F. Röthemeyer, F. Sommer "Kautschuktechnologie", 2. überarbeitete Auflage, Carl Hanser Verlag München Wien, 2006, Seite 346).

Im Falle des Einsatzes von Formtrennmitteln in der Elastomer Komponente des Elastomer-Teilstücks im erfindungsgemäßen Verbund wird bevorzugt wenigstens ein Formtrennmittel aus der Gruppe gesättigte und teilweise ungesättigte Fett- und Ölsäuren oder deren Derivate, insbesondere Fettsäureester, Fettsäuresalze, Fettalkohole und Fettsäureamide, eingesetzt. Im Fall der Applikation der Formtrennmittel auf die Formoberfläche können bevorzugt Produkte auf Basis von niedermolekularen Silikonverbindungen, Produkte auf Basis von Fluorpolymeren sowie Produkte auf Basis von Phenolharzen eingesetzt werden.

Im Falle des Einsatzes von Festigkeitsträgern (Fasern) in der Elastomer Komponente des Elastomer-Teilstücks im erfindungsgemäßen Verbund zur Verstärkung der Vulkanisate wird bevorzugt wenigstens ein Festigkeitsträger in Form von Fasern auf Basis von Glas, gemäß US-A-4,826,721 oder Corde, Gewebe, Fasern aus aliphatischen oder aromatischen Polyamiden (Nylon®, Aramid®), aus Polyestern oder aus Naturfaserprodukten eingesetzt. Es können sowohl Stapelfasern als auch Endlosfasern eingesetzt werden (J. Schnetger "Lexikon der Kautschuktechnik" 3. Auflage, Hüthig Verlag Heidelberg, 2004, Seiten 498 und 528). Eine beispielhafte Aufstellung von in der Kautschukindustrie üblichen Festigkeitsträgern findet man z.B. in F. Röthemeyer, F. Sommer "Kautschuktechnologie", 2. überarbeitete Auflage, Carl Hanser Verlag München Wien, 2006, Seite 823 bis 827.

Erfindungsgemäß eingeschlossene Erscheinungsformen der Elastomer Komponente des Elastomer-Teilstücks im erfindungsgemäßen Verbund sind geschäumte Vulkanisate, Zellgummi oder auch Moosgummi (J. Schnetger "Lexikon der Kautschuktechnik" 3. Auflage, Hüthig Verlag Heidelberg, 2004, Seiten 322-323 und 618). Geschäumte Vulkanisate werden bevorzugt mit Hilfe von Treibmitteln hergestellt.

Bevorzugt wird die für das erfindungsgemäße Formgebungsverfahren einzusetzende mit Schwefel zu vernetzende Elastomer Komponente des Elastomer-Teilstücks im erfindungsgemäßen Verbund aus wenigstens einem Kautschuk, Schwefel und gegebenenfalls weiteren Bestandteilen mittels des Vorgangs der sogenannten Mischungsverarbeitung mit Hilfe eines Innenmischers oder eines Walzwerks zu einer vulkanisierfähigen Kautschukmischung verarbeitet und damit für das eigentliche Formgebungsverfahren vorbereitet. Bei dieser Mischungsverarbeitung werden die Bestandteile der Kautschukmischungen für die Elastomer Komponente innig miteinander vermischt. Prinzipiell kann die Mischungsherstellung diskontinuierlich mittels Innermischer oder Walzwerk oder kontinuierlich mittels Extruder erfolgen (J. Schnetger "Lexikon der Kautschuktechnik" 3. Auflage, Hüthig Verlag Heidelberg, 2004, Seiten 275 und 315 bis 318).

### Polyamid-Komponente

Das für die Polyamid Komponente des erfindungsgemäßen Verbunds einzusetzende Polyamid wird bevorzugt aus einer Kombination von Diamin und Dicarbonsäure, aus einer ω-Aminocarbonsäure oder aus einem Lactam hergestellt. Bevorzugt einzusetzende Polyamide sind PA6, PA66, PA610 (CAS No. 9011-52-3), PA88, PA612 (CAS No. 26098-55-5), PA810, PA108, PA9, PA613, PA614, PA812, PA1010, PA10, PA814, PA148, PA1012, PA11 (CAS No. 25035-04-5), PA1014, PA1212 oder PA12 (CAS No. 24937-16-4). Erfindungsgemäß besonders bevorzugt wird für die im 2K-Spritzgießprozess einzusetzende Polyamidformmasse PA6 oder PA66 (CAS No. 32131-17-2) eingesetzt, insbesondere PA6 (CAS No. 25038-54-4). Die Herstellung der Polyamide ist Stand der Technik. Selbstverständlich können aber auch auf den oben genannten Polyamiden basierende Copolyamide eingesetzt werden.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden. Die technisch relevanten Verfahren zur Herstellung der im erfindungsgemäßen Verbund einzusetzenden Polyamid Komponente verlaufen bevorzugt über die Polykondensation in der Schmelze oder über die Polyaddition von entsprechenden Lactamen. Zu den Polyadditionsreaktionen von Lactamen werden die hydrolytische, die alkalische, die aktivierte anionische sowie die kationische Lactampolymerisation gezählt. Die Herstellung von Polyamiden durch thermische Polykondensation sowie durch Lactampolymerisation ist dem Fachmann bekannt, siehe unter anderem Nylon Plastics Handbook, Hanser-Verlag München 1995, Seiten 17-27 und Kunststoff-Handbuch 3/4, Polyamide, Carl Hanser Verlag, München 1998, Seiten 22-57.

Erfindungsgemäß bevorzugt für die Polyamid Komponente des Verbunds einzusetzende Polyamide sind teilkristalline, aliphatische Polyamide, die ausgehend von Diaminen und Dicarbonsäuren und/oder Lactamen mit wenigstens 5 Ringgliedern oder entsprechenden Aminosäuren hergestellt werden können. Die Kennzeichnung der Polyamide im Rahmen der vorliegenden Erfindung entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer α,ω-Aminocarbonsäure bzw. von dem davon abgeleiteten Lactam ausgegangen worden ist; im Übrigen sei verwiesen auf H. Domininghaus, Die Kunststoffe und ihre Eigenschaften, Seiten 272 ff., VDI-Verlag, 1976. Gemäß DE 10 2011 084 519 A1 besitzen teilkristalline Polyamide eine Schmelzenthalpie von mehr als 25 J/g, gemessen mit der DSC-Methode analog zu ISO 11357 beim 2. Aufheizen und Integration des Schmelzpeaks. Sie unterscheiden sich dadurch von den semikristallinen Polyamiden, die eine Schmelzenthalpie im Bereich von 4 bis 25 J/g, gemessen mit der DSC-Methode analog zu ISO 11357 beim 2. Aufheizen und Integration des Schmelzpeaks und von den amorphen Polyamiden mit einer Schmelzenthalpie von weniger als 4 J/g, gemessen mit der DSC-Methode analog zu ISO 11357 beim 2. Aufheizen und Integration des Schmelzpeaks.

Als Edukte zur Herstellung des Polyamid basierten Teilstücks des Verbundteils kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethane, Diaminodicyclohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt sind Polyamid 6 (PA-6), Polyamid 66 (PA-66) oder Caprolactam als Comonomer enthaltende Copolyamide, ganz besonders bevorzugt statistische, teilkristalline, aliphatische Copolyamide, insbesondere PA 6/66.

ε-Caprolactam (CAS No. 105-60-2) wird bevorzugt unter anderem zur Herstellung von Polyamid verwendet. Aus Cyclohexanon wird durch Umsetzung mit dem Hydrogensulfat oder dem Hydrochlorid des Hydroxylamins zunächst Cyclohexanonoxim hergestellt. Dieses wird durch eine Beckmann-Umlagerung in ε-Caprolactam umgewandelt.

Hexamethylendiaminadipat (CAS No. 3323-53-3) ist das Reaktionsprodukt von Adipinsäure und Hexamethylendiamin. Es wird unter anderem auch als Zwischenprodukt bei der Herstellung von Polyamid 66 verwendet. Der Trivialname AH-Salz leitet sich von den Anfangsbuchstaben der Ausgangssubstanzen ab. Erfindungsgemäß einzusetzendes teilkristallines PA6 und/oder PA 66 ist beispielsweise unter der Bezeichnung Durethan® bei der Lanxess Deutschland GmbH, Köln, Deutschland erhältlich.

Selbstverständlich können auch Mischungen dieser Polyamide eingesetzt werden, wobei das Mischungsverhältnis beliebig ist. Es können außerdem Anteile von rezyklierten Polyamid-Formmassen und / oder Faserrezyklaten in der Polyamid Komponente enthalten sein.

Ebenso können auch Mischungen verschiedener Polyamide, ausreichende Verträglichkeit vorausgesetzt, verwendet werden. Verträgliche Polyamidkombinationen sind dem Fachmann bekannt. Bevorzugt einzusetzende Polyamidkombinationen sind PA6/PA66, PA12/PA1012, PA12/1212, PA612/PA12, PA613/PA12, PA1014/PA12 oder PA610/PA12 sowie entsprechende Kombinationen mit PA11, besonders bevorzugt PA6/PA66. Im Zweifelsfall können verträgliche Kombinationen durch Routineversuche ermittelt werden.

Anstelle von aliphatischen Polyamiden kann vorteilhafterweise auch ein teilaromatisches Polyamid verwendet werden, dessen Dicarbonsäureanteil zu 5 bis 100 Mol.-% von aromatischer Dicarbonsäure mit 8 bis 22 C-Atomen herrührt und das vorzugsweise einen Kristallitschmelzpunkt Tₘ gemäß ISO 11357-3 von mindestens 250 °C, besonders bevorzugt von mindestens 260 °C und insbesondere bevorzugt von mindestens 270 °C besitzt. Derartige Polyamide werden üblicherweise mit dem Zusatz T (= teilaromatisch) bezeichnet. Sie sind herstellbar aus einer Kombination von Diamin und Dicarbonsäure, gegebenenfalls unter Zusatz einer ω-Aminocarbonsäure oder dem entsprechenden Lactam. Geeignete Typen sind bevorzugt PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam. Das teilaromatische Polyamid kann auch als Blend mit einem anderen Polyamid, bevorzugt mit einem aliphatischen Polyamid, besonders bevorzugt mit PA6, PA66, PA11 oder PA12, eingesetzt werden.

Eine andere geeignete Polyamidklasse sind transparente Polyamide. Diese sind in den meisten Fällen amorph, können aber auch mikrokristallin sein. Sie können entweder für sich oder in Mischung mit aliphatischen und/oder teilaromatischen Polyamiden, bevorzugt in Mischung mit PA6, PA66, PA11 oder PA12, eingesetzt werden. Zum Erzielen einer guten Haftung kommt es nicht auf das Ausmaß der Transparenz an; entscheidend ist hier, dass der Glasübergangspunkt Tg, gemessen in Analogie zu ISO 11357-3, mindestens 110 °C, bevorzugt mindestens 120 °C, besonders bevorzugt mindestens 130 °C und besonders bevorzugt mindestens 140 °C beträgt. Bevorzugte transparente Polyamide sind:
- das Polyamid aus 1,12-Dodecandisäure und 4,4'-Diaminodicyclohexylmethan (PAPACM12), insbesondere ausgehend von einem 4,4'-Diaminodicyclohexylmethan mit einem trans,trans-Isomerenanteil von 35 bis 65%;
- das Polyamid aus Terephthalsäure und/oder Isophthalsäure und dem Isomerengemisch aus 2,2,4- und 2,4,4-Trimethylhexamethylendiamin,
- das Polyamid aus Isophthalsäure und 1,6-Hexamethylendiamin,
- das Copolyamid aus einem Gemisch aus Terephthalsäure/Isophthalsäure und 1.6-Hexamethylendiamin, gegebenenfalls in Mischung mit 4,4'-Diaminodicyclohexylmethan,
- das Copolyamid aus Terephthalsäure und/oder Isophthalsäure, 3,3'-Dimethyl-4,4'-diaminodicyclohexylmethan aus Laurinlactam oder Caprolactam,
- das (Co)Polyamid aus 1,12-Dodecandisäure oder Sebacinsäure, 3,3'-Dimethyl-4,4'diaminodicyclohexylmethan und gegebenenfalls Laurinlactam oder Caprolactam,
- das Copolyamid aus Isophthalsäure, 4,4'-Diaminodicyclohexylmethan und Laurinlactam oder Caprolactam,
- das Polyamid aus 1,12-Dodecandisäure und 4,4'-Diaminodicyclohexylmethan (bei niedrigem trans,trans-Isomerenanteil),
- das Copolyamid aus Terephthalsäure und/oder Isophthalsäure sowie einem alkylsubstituierten Bis(4-aminocyclohexyl)methan-Homologen, gegebenenfalls in Mischung mit Hexamethylendiamin,
- das Copolyamid aus Bis(4-amino-3-methyl-5-ethyl-cyclohexyl)methan, gegebenenfalls zusammen mit einem weiteren Diamin, sowie Isophthalsäure, gegebenenfalls zusammen mit einer weiteren Dicarbonsäure,
- das Copolyamid aus einer Mischung von m-Xylylendiamin und einem weiteren Diamin, z.B. Hexamethylendiamin, sowie Isophthalsäure, gegebenenfalls zusammen mit einer weiteren Dicarbonsäure wie z.B. Terephthalsäure und/oder 2,6-Naphthalindicarbonsäure,
- das Copolyamid aus einer Mischung von Bis(4-amino-cyclohexyl)methan und Bis-(4-amino-3-methyl-cyclohexyl)methan sowie aliphatischen Dicarbonsäuren mit 8 bis 14 C-Atomen, sowie
- Polyamide oder Copolyamide aus einer Mischung, die 1,14-Tetradecandisäure sowie ein aromatisches, arylaliphatisches oder cycloaliphatisches Diamin enthält.

Diese transparenten Polyamide können durch Hinzunahme weiterer Komponenten, bevorzugt Caprolactam, Laurinlactam oder Diamin/Dicarbonsäure-Kombinationen, oder durch teilweisen oder vollständigen Ersatz von Ausgangskomponenten durch andere Komponenten weitestgehend variiert werden.

Lactame bzw. ω-Aminocarbonsäuren, die als polyamidbildende Monomere eingesetzt werden, enthalten 4 bis 19, bevorzugt 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Bevorzugte Kombinationen von Diamin und Dicarbonsäure sind Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden, insbesondere Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

Polyamidformmassen im Sinne dieser Erfindung sind Aufbereitungen von Polyamiden für die Herstellung der Polyamid Komponente im erfindungsgemäßen Verbund, die zur Verbesserung der Verarbeitungseigenschaften oder zur Modifizierung der Gebrauchseigenschaften vorgenommen wurden. In einer bevorzugten Ausführungsform enthalten diese Polyamidformmassen zusätzlich zum Polyamid und zum flüssigen Polybutadien-Copolymer wenigstens einen der folgenden Zusätze
a) andere Polymere in der Funktion als Schlagzähmodifikatoren, ABS (ABS = Acrylnitril-Butadien-Styrol) oder Polyphenylenether. Hierbei ist darauf zu achten, dass keine Phasenumkehr stattfindet, dass also die Matrix der Formmasse aus Polyamid gebildet wird, oder dass zumindest ein interpenetrierendes Netzwerk vorliegt. Dem Fachmann ist bekannt, dass die Phasenmorphologie in erster Linie von den Volumenanteilen der einzelnen Polymere sowie den Schmelzeviskositäten abhängt. Wenn das andere Polymer eine deutlich höhere Schmelzeviskosität als das Polyamid besitzt, bildet das Polyamid auch dann die Matrix, wenn es zu weniger als 50 Volumenprozent des Thermoplastanteils, beispielsweise zu etwa 40 Volumenprozent, vorliegt. Dies ist insbesondere bei Blends mit Polyphenylenether relevant;
b) faserförmige Verstärkungsstoffe, insbesondere Glasfasern mit rundem oder flachem Querschnitt, Carbonfasern, Aramidfasern, Fasern aus rostfreiem Stahl oder Kaliumtitanatwhisker;
c) Füllstoffe, insbesondere Talkum, Glimmer, Silikat, Quarz. Zirkondioxid, Aluminiumoxid, Eisenoxide, Zinksulfid, Graphit, Molybdändisulfid, Titandioxid, Wollastonit, Kaolin, amorphe Kieselsäuren, Magnesiumcarbonat, Kreide, Kalk, Feldspat, Bariumsulfat, Leitfähigkeitsruß, Graphitfibrillen, Vollglaskugeln, Hohlglaskugeln oder gemahlenes Glas;
d) Weichmacher, insbesondere Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure;
e) Pigmente und/oder Farbstoffe, insbesondere Ruß, Eisenoxid, Zinksulfid, Titandioxid, Ultramarin, Nigrosin, Perlglanzpigmente oder Metallflitter;
f) Flammschutzmittel, insbesondere Antimontrioxid, Hexabromcyclododecan, Tetrabrombisphenol, Borate, roter Phosphor, Magnesiumhydroxid, Aluminiumhydroxid, Melamincyanurat und dessen Kondensationsprodukte wie Melam, Melem, Melon, Melaminverbindungen, insbesondere Melaminpyrophosphat oder Melaminpolyphosphat, Ammoniumpolyphosphat sowie phosphororganische Verbindungen bzw. deren Salze, insbesondere Resorcinoldiphenylphosphat, Phosphonsäureester oder Metallphosphinate;
g) Verarbeitungshilfsmittel, insbesondere Paraffine, Fettalkohole, Fettsäureamide, Fettsäureester, verseifte Fettsäuren, Paraffinwachse, Montanate, Montanwachse oder Polysiloxane sowie
h) Stabilisatoren, insbesondere Kupfersalze, Molybdänsalze, Kupferkomplexe, Phosphite, sterisch gehinderte Phenole, sekundäre Amine, UV-Absorber oder HALS-Stabilisatoren.

Das erfindungsgemäß in der Polyamid Komponente einzusetzende flüssige Polybutadien-Copolymer wird auf verschiedene Weise ins Polyamid bzw. in die Polyamid Komponente des Polyamid-Teilstücks für das Verbundteil eingearbeitet. In einer bevorzugten Ausführungsform wird das flüssige Polybutadien-Copolymer entweder während der Compoundierung der Polyamidformmassen zusammen mit den übrigen Zuschlagstoffen dem Polyamid beigefügt, oder als Masterbatch dem Polyamid während der Compoundierung zugegeben, oder als Mischung mit der Polyamid Formmasse, die zumeist als Granulat eingesetzt wird, über einen Dosiertrichter dem Spritzaggregat für den Spritzguß zugeführt.

In einer alternativen bevorzugten Ausführungsform wird die Polybutadien-Copolymerenthaltende Polyamidformmasse in Form einer Granulatmischung (Trockenmischung, Dry Blend, siehe: Die Kunststoffe - Chemie, Physik, Technologie, hrsg. von B. Carlowitz, Carl Hanser Verlag München Wien, 1990, S. 266) aus einer Polybutadien-Copolymer-enthaltenden Polyamid Formmasse und einer weiteren nicht Polybutadien-Copolymer-enthaltenden Polyamid Formmasse hergestellt und damit eine Polyamid Formmasse mit einer angepassten Polybutadien-Copolymer-Konzentration erhalten.

In einer weiteren alternativen bevorzugten Ausführungsform wird eine Lösung von bei RT flüssigem Polybutadien-Copolymer, in einem geeigneten Lösungsmittel mit einer Lösung des Polyamids in einem geeigneten Lösungsmittel gemischt. Wenn man ausgehend von dieser Lösung die Lösungsmittel abdestilliert, erhält man nach Trocknung die Polybutadien-Copolymer enthaltende Polyamidformmasse.

Erfindungsgemäß besonders bevorzugt erfolgt die Zugabe von bei RT flüssigem Polybutadien-Copolymer zum Polyamid über einen Dosiertrichter im Spritzaggregat oder während der Compoundierung zusammen mit den übrigen Zuschlagstoffen, insbesondere bevorzugt während der Compoundierung zusammen mit den übrigen Zuschlagstoffen.

### Verfahren

Erfindungsgemäße Verbundteile werden einstufig oder zweistufig durch wenigstens ein Formgebungsverfahren, bevorzugt aus der Reihe Extrusion, Flachfolienextrustion, Folienblasen, Extrusionsblasformen, Coextrusion, Kalandrieren, Gießen, Pressverfahren, Spritzprägeverfahren, Transferpressverfahren, Transferspritzpressverfahren oder Spritzgießen oder dessen Sonderverfahren, insbesondere Gasinjektionstechnik, hergestellt, besonders bevorzugt durch Mehr-Komponenten-Spritzgießen, ganz besonders bevorzugt durch 2-Komponenten-Spritzgießen, auch als 2K-Spritzguß bezeichnet.

Unter dem Formgebungsverfahren der Extrusion wird erfindungsgemäß die kontinuierliche Herstellung von Kunststoff-Halbzeugen, insbesondere von Folien, Platten, Rohren oder Profilen, verstanden. Beim Extrusionsverfahren presst der sogenannte Extruder, bestehend aus Schnecke und Zylinder, die zu verarbeitende Kunststoffmasse, in der vorliegenden Erfindung die Polyamidmasse, unter Druck kontinuierlich durch ein Formwerkzeug. In der Praxis werden Einschnecken-, Zweischnecken-Extruder oder Sonderbauarten eingesetzt. Mit der Wahl des Formwerkzeugs wird die gewünschte Querschnittsgeometrie des Extrudats eingestellt (Ullmann's Encyclopedia of Industrial Chemistry, 7th Edition, Vol. 28, Plastics Processing, Wiley-VCH Verlag, Weinheim, 2011, S. 169 bis 177).

Bei der Extrusion von Kautschukmischungen erfolgt nach dem Durchgang durch das Formwerkzeug noch die Vulkanisation. Hier wird zwischen Vulkanisationsverfahren unter Druck und drucklosen Vulkanisationsverfahren unterschieden (F. Röthemeyer, F. Sommer "Kautschuktechnologie", 2. überarbeitete Auflage, Carl Hanser Verlag München Wien, 2006, Seite 597 bis 727). Beim Formgebungsverfahren der Coextrusion werden Polyamidformmassen und Kautschukmassen vor der formgebenden Öffnung zusammengebracht, um nach der Vulkanisation des Extrudats ein Verbundteil aus Polyamid und Elastomer zu erhalten (Ullmann's Encyclopedia of Industrial Chemistry, 7th Edition, Vol. 28, Plastics Processing, Wiley-VCH Verlag, Weinheim, 2011, S. 177). Die Coextrusion von Polyamidformmasse und Kautschukmasse kann auch sequentiell, d.h. nachgeschaltet, erfolgen (F. Röthemeyer, F. Sommer "Kautschuktechnologie", 2. überarbeitete Auflage, Carl Hanser Verlag München Wien, 2006, Seite 852 bis 853). Beim Beaufschlagen und Ausvulkanisieren nach dem zweistufigen Extrusionsverfahren wird ein in einer ersten Stufe hergestelltes Profil aus einer Polyamidformmasse, z.B. ein Rohr, mit einer Kautschukmasse ummantelt und gegebenenfalls unter Druck ausvulkanisiert. Entsprechend verfährt man mit Platten aus Polyamidformmassen (F. Röthemeyer, F. Sommer "Kautschuktechnologie", 2. Überarbeitete Auflage, Carl Hanser Verlag München Wien, 2006, Seite 977 bis 978).

Mit den Formgebungsverfahren Flachfolienextrustion, Folienblasen, Extrusionsblasformen, Coextrusion, Kalandrieren oder Gießen können Folien oder Laminate erhalten werden (Die Kunststoffe - Chemie, Physik, Technologie, hrsg. von B. Carlowitz, Carl Hanser Verlag München Wien, 1990, S. 422 bis 480). Polyamide und mit Schwefel zu vernetzende Kautschukmischungen können mit diesen Verfahren zu Mehrschicht-Laminaten und Mehrschicht-Folien verbunden werden. Gegebenenfalls wird nach der Folienherstellung die Kautschuk Komponente ausvulkanisiert. Coextrudierte Mehrschicht-Folien sind für die Verpackungstechnik von großer Bedeutung.

Beim Pressverfahren (Compression Molding) werden zunächst über Extrusion mit anschließendem Stanzen oder Schneiden aus der unvulkanisierten Kautschukmischung Rohlinge hergestellt. Die Rohlinge werden in die Kavitäten eines auf Vulkanisationstemperatur vorgeheizten Werkzeugs eingelegt. Unter Anwendung von Druck und Wärme erfolgt die Formgebung in die gewünschte Formteilgeometrie und die Vulkanisation setzt ein (F. Röthemeyer, F. Sommer "Kautschuktechnologie", 2. überarbeitete Auflage, Carl Hanser Verlag München Wien, 2006, Seite 729 bis 738). Beim Compression Molding von Thermoplasten verfährt man analog. Hier wird das Werkzeug bis zum Entformen abgekühlt (Ullmann's Encyclopedia of Industrial Chemistry, 7th Edition, Vol. 28, Plastics Processing, Wiley-VCH Verlag, Weinheim, 2011, S. 167).

Das Spritzprägen (Injection-Compression Molding) ist ein Sonderverfahren des Spritzgießens zur Herstellung hochgenauer Kunststoffteile ohne Verzug. Dabei wird die Kunststoffschmelze nur unter erniedrigter Schließkraft in das Werkzeug eingespritzt, was zu einem leichten Öffnen der Werkzeughälften führt. Für die Ausfüllung der gesamten Werkzeugkavität wird die volle Schließkraft appliziert und so das Formteil endgültig ausgeformt

(Ullmann's Encyclopedia of Industrial Chemistry, 7th Edition, Vol. 28, Plastics Processing, Wiley-VCH Verlag, Weinheim, 2011, S. 187). Beim Spritzprägen von Kautschuken verfährt man analog, indem die Kautschukmischung in ein auf Vulkanisationstemperatur geheiztes Werkzeug gespritzt wird. Mit Schließen des Werkzeugs erfolgt die Formgebung und die Vulkanisation (F. Röthemeyer, F. Sommer "Kautschuktechnologie", 2. Überarbeitete Auflage, Carl Hanser Verlag München Wien, 2006, Seite 738 bis 739).

Zum Transferpressverfahren und Transferspritzpressverfahren siehe F. Röthemeyer, F. Sommer "Kautschuktechnologie", 2. überarbeitete Auflage, Carl Hanser Verlag München Wien, 2006, Kapitel 12.3 und 12.4, Seite 740 bis 753, und Kapitel 12.5., Seite 753 bis 755.

Das Spritzgießen - oft auch als Spritzguss oder Spritzgussverfahren bezeichnet - ist ein Formgebungsverfahren, das hauptsächlich in der Kunststoffverarbeitung eingesetzt wird.

Mit diesem Verfahren lassen sich wirtschaftlich direkt verwendbare Formteile ohne Nachbearbeitung in großer Stückzahl herstellen. Dazu wird mit einer Spritzgießmaschine der jeweilige polymere Werkstoff in einer Spritzeinheit plastifiziert und in ein Spritzgießwerkzeug eingespritzt. Der Hohlraum, die Kavität, des Werkzeugs bestimmt die Form des fertigen Teils. Es sind heute Teile von wenigen Zehntel Gramm bis in den größeren Kilogramm-Bereich durch Spritzgießen herstellbar (Ullmann's Encyclopedia of Industrial Chemistry, 7th Edition, Vol. 28, Plastics Processing, Wiley-VCH Verlag, Weinheim, 2011, S. 181 bis 189).

Beim Mehrkomponenten-Spritzgießen werden mehrere Komponenten im Spritzguss-Verfahren zu einem Verbundteil verbunden. Beim 2-Komponenten-Spritzgießen werden zwei Komponenten im Spritzguss-Verfahren zu einem Verbundteil verbunden. Bevorzugt werden erfindungsgemäß eine Polybutadien-Copolymer enthaltende Polyamid Komponente und eine Elastomer Komponente im 2-Komponenten-Spritzguß-Verfahren zu einem Verbundteil verbunden. Das 2-Komponenten-Spritzguß-Verfahren kann sowohl in einem einstufigen Prozess als auch in einem zweitstufigen Prozess betrieben werden (F. Johannaber, W. Michaeli, Handbuch Spritzgießen, 2. Auflage, Carl Hanser Verlag München, 2004, Seite 506 bis 523; Handbuch Kunststoff-Verbindungstechnik, hrsg. von G. W. Ehrenstein, Carl Hanser Verlag München Wien, 1990, Seite 517 bis 540).

Beim zweistufigen Prozess wird aus der erfindungsgemäß einzusetzenden Polybutadien-Copolymer enthaltenden Polyamidformmasse zunächst das steife, thermoplastische Formteil insbesondere durch eines der oben genannten Verarbeitungsverfahren, bevorzugt durch Spritzgießen, hergestellt. Dieses thermoplastische Formteil kann bei Bedarf gelagert werden.

In einem weiteren Schritt wird das thermoplastische Formteil mit der Elastomer-Komponente mittels eines der oben genannten Verarbeitungsverfahren, bevorzugt durch Spritzgießen, beaufschlagt und den Vulkanisationsbedingungen des Kautschuks ausgesetzt.

Die Fertigung kann auch mit einer Maschine erfolgen (einstufiger Prozess), die bevorzugt über eine Wendeplatte oder einen Drehteller, und/oder über entsprechende Werkzeugtechnik, bevorzugt mittels Schiebern, verfügt, die zeitlich verzögert Bereiche der Kavität für die zweite Komponente freigeben. Beim Einsatz einer Maschine, die über eine Wendeplatte, einen Drehteller oder ein Werkzeug, das über einen oder mehrere Schieber verfügt, wird üblicherweise in einem ersten Takt ein Vorspritzling aus der Polyamid Komponente in einer Kavität des Werkzeuges, der ersten Station, hergestellt. Nach einer Drehbewegung des Werkzeugs, oder mittels Umsetztechnik, wird der Vorspritzling in eine zweite, geometrisch veränderte Fertigspritz-Station gebracht (beispielsweise mittels der Drehtechnik durch eine Drehung um 180° bzw. 120° bei Dreikavitätenwerkzeugen oder mittels einer Sperrschieber-Technik, sogenanntes Core-Back-Verfahren) und in einem zweiten Takt wird die Kautschukmischung für das Elastomer-Teilstück, erhältlich aus mit elementarem Schwefel zu vulkanisierenden bzw. zu vernetzenden Kautschuk, eingespritzt. Nach Erreichen der Entformungsstabilität der Elastomer Komponente kann der Verbund entformt werden.

Die Schmelzetemperaturen des erfindungsgemäß als thermoplastische Komponente einzusetzenden Polyamids liegen bevorzugt im Bereich von 180 bis 340 °C, besonders bevorzugt im Bereich von 200 bis 300 °C. Die Werkzeugtemperaturen der thermoplastischen Temperierbereiche liegen bevorzugt im Bereich von 20 bis 200 °C, besonders bevorzugt im Bereich von 60 bis 180°C. Bevorzugte Massetemperaturen der Kautschukmischung für das Elastomer-Teilstück, erhältlich aus mit elementarem Schwefel zu vulkanisierenden bzw. zu vernetzenden Kautschuk, im Plastifizierzylinder liegen im Bereich von 20 bis 150 °C, bevorzugt im Bereich von 60 bis 100°C. Bevorzugte Vulkanisationstemperaturen der Elastomer Komponente liegen im Bereich von 120 bis 220 °C, bevorzugt im Bereich von 140 bis 200 °C. In einer bevorzugten Ausführungsform erfolgt nach dem Entformen der Elastomer Komponente aus der Werkzeugkavität eine Temperung. Im physikalischen Sinn bedeutet Tempern, dass ein Festkörper auf eine Temperatur unterhalb der Schmelztemperatur erhitzt wird. Dies geschieht über eine längere Zeit hinweg - einige Minuten bis hin zu einigen Tagen -. Durch die erhöhte Beweglichkeit der Atome können so Strukturdefekte ausgeglichen und die Kristallstruktur in der Nah- und Fernordnung verbessert werden. Auf diese Weise kann der Prozess des Schmelzens und (extrem) langsamen Abkühlens zur Einstellung der Kristallstruktur vermieden werden. Eine Temperung im Sinne der vorliegenden Erfindung erfolgt bevorzugt bei einer Temperatur im Bereich von 120 bis 220 °C, bevorzugt bei einer Temperatur im Bereich von 140 bis 200 °C.

Diese Werte sind erheblich abhängig von der Bauteilgeometrie, insbesondere der Dicke sowie der Fließweglänge, der Art und Lage der Angussgestaltung, insbesondere Heiß- oder Kaltkanal, sowie von den spezifischen Materialkennwerten. Die Nachdruckphase liegt bevorzugt in Bereichen von 0 bis 3000 bar bei Nachdruckzeiten von 0 Sekunden bis zum Öffnen des Werkzeuges.

In einer alternativen, bevorzugten Ausführungsform der vorliegenden Erfindung wird das Verbundteil aus einem Polyamid-Teilstück und einem Elastomer-Teilstück im sogenannten umgekehrten 2-Komponenten-Spritzguß (2K-Spritzguß) gefertigt, d.h. in der Reihenfolge erst die weiche Komponente, dann die harte Komponente, wobei das Polyamid-Teilstück wiederum aus der erfindungsgemäß einzusetzenden Polybutadien-Copolymer enthaltenden Polyamidformmasse und das Elastomer-Teilstück aus dem in Anwesenheit von freiem Schwefel zu vernetzenden Kautschuk gefertigt werden.

Im umgekehrten 2K-Spritzguß wird also zunächst die Kautschukmischung für das Elastomer-Teilstück, erhältlich aus mit elementarem Schwefel zu vulkanisierenden bzw. zu vernetzenden Kautschuk, spritzgegossen und vulkanisiert, danach wird die erfindungsgemäß einzusetzende Polybutadien-Copolymer enthaltende Polyamidformmasse aufgespritzt. Genau wie beim (konventionellen) 2K-Spritzgieß-Prozess kann die Fertigung in einer Maschine (einstufiger Prozess) erfolgen, die bevorzugt über eine Wendeplatte oder einen Drehteller, und/oder über entsprechende Werkzeugtechnik, bevorzugt mittels Schiebern, verfügt, die zeitlich verzögert Bereiche der Kavität für die zweite Komponente freigeben. Die entsprechenden Spritzgieß-Parameter können vom (konventionellen) 2K-Spritzgieß-Prozess übernommen werden (Zylindertemperaturen, Werkzeugtemperaturen, Vulkanisationszeiten, Nachdruck, Nachdruckzeiten, etc). Wenn man die Elastomer Komponente nicht ausvulkanisiert, sondern nur bis zur Formstabilität anvulkanisiert und dann die Polyamidformmasse aufspritzt, erfährt man einen Vorteil des umgekehrten 2K-Spritzgieß-Prozesses. Auf diese Art und Weise lässt sich nämlich die Zykluszeit für die Herstellung des gesamten Verbundteils verkürzen. Da die Zykluszeit für die Herstellung der Polyamid Komponente üblicherweise sehr viel kleiner ist als die der Elastomer Komponente, kann nach diesem bevorzugten Verfahren überraschenderweise die Zykluszeit für die Herstellung des gesamten Verbundteils auf die Zykluszeit für die Herstellung der Elastomer Komponente reduziert werden. In einer bevorzugten Ausführungsform erfolgt auch im umgekehrten 2K-Spritzguß nach dem Entformen des Verbundteils aus der Werkzeugkavität eine Temperung.

Das Verfahren des Spritzgießens von Polyamid zeichnet sich dadurch aus, dass der Rohstoff, also die einzusetzende erfindungsgemäße Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet im Spritzgießprozess die Teilschritte:
1. Plastifizieren / Aufschmelzen
2. Einspritzphase (Füllvorgang)
3. Nachdruckphase (wegen thermischer Kontraktion bei der Kristallisation)
4. Entformen.

Eine zu diesem Zweck einzusetzende Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und gegebenenfalls die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Polyamid Schmelze gekühlt und somit das zu fertigende Bauteil bzw. das Erzeugnis oder der Formkörper gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung.

Zum Spritzgießen von Polyamiden siehe auch Kunststoff-Handbuch 3/4, Polyamide, Carl Hanser Verlag, München 1998, Seiten 315-352.

Das Verfahren des Spritzgießens zur Herstellung von Gummiformteilen zeichnet sich dadurch aus, dass der Rohstoff, also die zu vernetzende Kautschukmischung, in einem beheizten zylindrischen Hohlraum plastifiziert und als Spritzmasse unter Druck in einem auf Vulkanisationstemperatur temperierten Hohlraum gespritzt wird. Nach dem Ausvulkanisieren der Masse wird das Spritzgussteil entformt. Zylinder und Schnecken der Spritzgießmaschine sind in für den Fachmann bekannter Weise für die Kautschukverarbeitung ausgelegt und das Werkzeug auf Vulkanisationstemperatur beheizbar. Die Vulkanisationszeiten der Kautschuk Komponente richten sich außer nach der Kautschukmischung nach den Vulkanisationstemperaturen und nach der Geometrie der zu fertigenden Kautschuk Komponente. Sie liegen bevorzugt zwischen 15 s und 15 min; niedrigere Temperaturen und dickere Kautschukteile erfordern längere Vulkanisationszeiten (F. Röthemeyer, F. Sommer "Kautschuktechnologie", 2. überarbeitete Auflage, Carl Hanser Verlag München Wien, 2006, Seite 755 bis 815).

Im Falle des gegebenenfalls zusätzlichen Einsatzes äußerer Entformungshilfsmittel ist dafür Sorge zu tragen, dass diese nicht in die Grenzschicht der Werkstoffe gelangen, da sie die Verbundhaftung beeinträchtigen können.

Als in einer Ausführungsform einzusetzende Entformungsmittel, auch als Gleitmittel oder Formtrennmittel bezeichnet, kommen bevorzugt gesättigte und teilweise ungesättigte Fett- und Ölsäuren und deren Derivate, insbesondere Fettsäureester, Fettsäuresalze, Fettalkohole, Fettsäureamide, die vorzugsweise als Mischungsbestandteil Verwendung finden, in Betracht sowie weiterhin auf die Formoberfläche applizierbare Produkte, insbesondere Produkte auf Basis von niedermolekularen Silikonverbindungen, Produkte auf Basis von Fluorpolymeren sowie Produkte auf Basis von Phenolharzen.

Die Entformungsmittel werden als Mischungsbestandteil bevorzugt in Mengen von ca. 0,1 bis 10 phr, besonders bevorzugt in Mengen von 0,5 bis 5 phr, bezogen auf 100 phr des/der Elastomers(e) in der Kautschuk-Komponente, eingesetzt.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen Polybutadien-Copolymers enthält, wobei die Summe der Gew.-Teile von a) und b) 100 beträgt und das Polybutadien-Copolymer eine dynamische Viskosität, gemessen mit der Kegel-Platte-Methode analog DIN 53019 bei einer Schergeschwindigkeit von 50 1/s, bei Normaldruck und bei einer Temperatur von 25 °C im Bereich von 100 bis 1.000.000 mPas aufweist, und als Polyamid PA6 oder PA66 und für das Elastomer-Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen Polybutadien-Copolymers enthält, wobei die Summe der Gew.-Teile von a) und b) 100 beträgt und das Polybutadien-Copolymer eine dynamische Viskosität, gemessen mit der Kegel-Platte-Methode analog DIN 53019 bei einer Schergeschwindigkeit von 50 1/s, bei Normaldruck und bei einer Temperatur von 25 °C im Bereich von 100 bis 1.000.000 mPas aufweist, und als Polyamid PA6 und für das Elastomer-Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen Polybutadien-Copolymers enthält, wobei die Summe der Gew.-Teile von a) und b) 100 beträgt und das Polybutadien-Copolymer eine dynamische Viskosität, gemessen mit der Kegel-Platte-Methode nach DIN 53019 bei einer Schergeschwindigkeit von 50 1/s, bei Normaldruck und bei einer Temperatur von 25 °C im Bereich von 100 bis1.000.000 mPas aufweist, und als Polyamid PA66 und für das Elastomer-Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs oder NBRs enthält, wobei die Summe der Gew.-Teile von a) und b) 100 beträgt, als Polyamid PA6 oder PA66 und für das Elastomer-Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs oder NBRs
enthält, wobei die Summe der Gew.-Teile von a) und b) 100 beträgt, als Polyamid PA6 und für das Elastomer-Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs oder NBRs
enthält, wobei die Summe der Gew.-Teile von a) und b) 100 beträgt, als Polyamid PA66 und für das Elastomer-Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA6 und für das Elastomer-Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA66 und für das Elastomer-Teilstück wenigstens ein mit elementarem Schwefel als Vernetzungsmittel zu vernetzender Kautschuk der Reihe NR, EPDM, NBR, CR, BR, SBR, XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA6 und für das Elastomer-Teilstück mit elementarem Schwefel als Vernetzungsmittel zu vernetzender Kautschuk NR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA66 und für das Elastomer-Teilstück mit elementarem Schwefel als Vernetzungsmittel zu vernetzender Kautschuk NR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA6 und für das Elastomer-Teilstück mit elementarem Schwefel als Vernetzungsmittel zu vernetzender Kautschuk EPDM eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA66 und für das Elastomer-Teilstück mit elementarem Schwefel als Vernetzungsmittel zu vernetzender Kautschuk EPDM eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA6 und für das Elastomer-Teilstück mit elementarem Schwefel als Vernetzungsmittel zu vernetzender Kautschuk NBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA66 und für das Elastomer-Teilstück mit elementarem Schwefel als Vernetzungsmittel zu vernetzender Kautschuk NBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA6 und für das Elastomer-Teilstück mit elementarem Schwefel als Vernetzungsmittel zu vernetzender Kautschuk CR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA66 und für das Elastomer-Teilstück mit elementarem Schwefel als Vernetzungsmittel zu vernetzender Kautschuk CR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA6 und für das Elastomer-Teilstück mit elementarem Schwefel als Vernetzungsmittel zu vernetzender Kautschuk BR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA66 und für das Elastomer-Teilstück mit elementarem Schwefel als Vernetzungsmittel zu vernetzender Kautschuk BR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA6 und für das Elastomer-Teilstück mit elementarem Schwefel als Vernetzungsmittel zu vernetzender Kautschuk SBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA66 und für das Elastomer-Teilstück mit elementarem Schwefel als Vernetzungsmittel zu vernetzender Kautschuk SBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA6 und für das Elastomer-Teilstück mit elementarem Schwefel als Vernetzungsmittel zu vernetzender Kautschuk XNBR eingesetzt wird.

In bevorzugter Ausführung betrifft die vorliegende Erfindung ein Verbundteil aus mindestens einem Teilstück hergestellt aus mindestens einer Polyamidformmasse und mindestens einem Elastomer-Teilstück, dadurch gekennzeichnet, dass die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen SBRs
enthält, wobei die Summe der Gew.-Teile von a) und b) 100 beträgt, als Polyamid PA66 und für das Elastomer-Teilstück mit elementarem Schwefel als Vernetzungsmittel zu vernetzender Kautschuk XNBR eingesetzt wird.

In ganz besonders bevorzugter Ausführungsform betrifft die vorliegende Erfindung ein Verbundteil, das aus mindestens einem Teilstück hergestellt aus mindestens einer Polyamidformmasse und mindestens einem Teilstück hergestellt aus wenigstens einem mit elementarem Schwefel als Vernetzungsmittel zu vulkanisierenden Kautschuk zusammengesetzt ist, dadurch gekennzeichnet, dass die Polyamidformmasse zu mindestens 30 Gew.-%, bevorzugt zu mindestens 45 Gew.-%, besonders bevorzugt zu mindestens 55 Gew.-% und insbesondere bevorzugt zu mindestens 65 Gew.-% aus der Mischung folgender Komponenten besteht:
a) 60 bis 99,9 Gew.-Teile, bevorzugt 75 bis 99,8 Gew.-Teile und besonders bevorzugt 85 bis 99,7 Gew.-Teile und ganz besonders bevorzugt 88 bis 99,5 Gew.-Teile Polyamid sowie
b) 0,1 bis 40 Gew.-Teile, bevorzugt 0,2 bis 25 Gew.-Teile, besonders bevorzugt 0,3 bis 15 Gew.-Teile ganz besonders bevorzugt 0,5 bis 12 Gew.-Teile wenigstens eines bei RT flüssigen Polybutadien-Copolymers, bevorzugt wenigstens eines bei RT flüssigen SBRs,
wobei die Summe der Gew.-Teile von a) und b) 100 beträgt.

Die vorliegende Erfindung betrifft zudem die Verwendung von wenigstens einem bei RT flüssigen Polybutadien-Copolymers in der Polyamid Komponente zur Steigerung der Verbundhaftung eines Verbundteils aus mindestens einem Teilstück hergestellt aus einer Polyamidformmasse und mindestens einem Teilstück hergestellt aus einem Elastomer, erhältlich aus mit elementarem Schwefel zu vulkanisierenden bzw. zu vernetzenden Kautschuk, das durch wenigstens ein Formgebungsverfahren erhalten wurde.

### Beispiele:

### 1. Eingesetzte Polyamid Komponenten:

Die Zusammensetzungen der Polyamid Komponenten sind in Tabelle 1 zusammengefasst.
Die Angabe der Bestandteile der Polyamid Komponenten erfolgt in Massenanteilen bezogen auf die Gesamtformmasse.

**Tabelle 1: Zusammensetzung der Polyamidformmasse für die Polyamid-basierte Komponente des Verbundes**

| Polyamid Komponente | 1 | 2 |
|---|---|---|
| Bestandteil A | 100 | 90 |
| Bestandteil B | - | 10 |
| Herstellung Dry Blend nach Compoundierung | - | Ja |
| Resultierende Gehalte nach Compoundierung und Dry Blend-Herstellung | | |
| Polybutadien-Copolymer | 0,0 | 5,0 |
| Glasfaser | 30,0 | 28,5 |

Produktnamen und Hersteller der Bestandteile der Polyamid Komponenten in Tabelle 1:

| | |
|---|---|
| Bestandteil A = | Durethan® BKV30 H2.0 901510 der LANXESS Deutschland GmbH, Köln, mit der ISO Formmassenbezeichnung ISO 1874-PA6, GHR, 14-090, GF 30, ein wärmestabilisiertes, mit 30% Glasfasern versetztes Polyamid 6 |
| Bestandteil B = | Polybutadien-Copolymer, Ricon® 181 (flüssiges Styrol-1,3-Butadien-Copolymer) mit einer dynamischen Viskosität bei 25 °C (DIN 53019, Kegel-Platte-Methode, Schergeschwindigkeit 50 1/s) von 14.600 mPas mit einem zahlenmittleren Molekulargewicht Mn im Bereich von 3.200 g/mol (Herstellerangabe) der Cray Valley USA, LLC, Exton, PA, USA |

### Herstellung der Polyamid Komponenten in Tabelle 1:

Das Vermischen der Bestandteile der Polyamid Komponenten 2 gemäß Tabelle 1 zu Polyamid Formmassen erfolgte in einem Doppelschneckenextruder des Typs ZSK 26 der Coperion GmbH, Stuttgart (vormals Coperion Werner & Pfleiderer GmbH & Co. KG, Stuttgart). Die Compoundierung wurde mit einer Massentemperatur von 260 bis 300 °C und mit einem Durchsatz von 8 bis 60 kg/h durchgeführt. Die Schmelze wurde als Strang in ein Wasserbad ausgetragen und anschließend granuliert.
Bei Polyamid Komponente 2 wurde nach Compoundierung und Granulierung durch Trockenmischen aus der aus der Compoundierung und Granulierung hervorgegangenen Polyamid Formmasse der Zusammensetzung gemäß Tabelle 1 und einer Polyamid Formmasse Durethan® BKV30 H2.0 901510 der LANXESS Deutschland GmbH, Köln, zu gleichen Gewichtsteilen (1:1) ein Dry Blend hergestellt. Da Durethan® BKV30 H2.0 901510 kein Polybutadien-Copolymer enthält, verfügte Polyamid Komponente 2 als Dry Blend über einen Gehalt an Polybutadien-Copolymer Ricon® 181 von 5%.
In Tabelle 1 ist der nach Compoundierung und Dry Blend-Herstellung resultierenden Gehalte an Polybutadien-Copolymer und Glasfaser in den Polyamid Komponenten 1 bis 2 aufgeführt.
Nach Compoundierung und Dry Blend-Herstellung wurden die Polyamid Formmassen über 4 Stunden im Trockenlufttrockner bei 80 °C getrocknet, bevor sie anschließend im Spritzguss verarbeitet wurden.

### 2. Eingesetzte Elastomer Komponenten:

Die Zusammensetzungen der Kautschukmischungen der nach Vulkanisation resultierenden Elastomer Komponenten sind in Tabelle 2 zusammengefasst.
Die Angabe der Kautschukmischungsbestandteile der Elastomer Komponenten erfolgt in Massenteilen bezogen auf 100 Massenteile Kautschuk.

**Tabelle 2: Zusammensetzung der Kautschukmischungen der nach Vulkanisation resultierenden Elastomer Komponenten**

| Elastomer Komponente | A |
|---|---|
| Keltan® 2450 | 100 |
| N550 | 60 |
| PEG-4000 | 5 |
| Sunpar® 2280 | 5 |
| Stearinsäure | 3 |
| ZnO | 5 |
| Schwefel | 0,7 |
| TBBS | 1 |
| TBzTD-70 | 3,5 |

Produktnamen und Hersteller der Kautschukmischungsbestandteile in Tabelle 2:

| | |
|---|---|
| Keltan® 2450 = | Ethylen-Propylen-Dien-Kautschuk (EPDM) der LANXESS Deutschland GmbH, Köln |
| N550 = | Industrie-Ruß Corax® N550 der Orion Engineered Carbons GmbH |
| PEG-4000 = | Weichmacher der Carl Roth GmbH & Co.KG, Karlsruhe |
| Sunpar® 2280 = | Paraffinisches Weichmacheröl der Schill & Seilacher "Struktol" GmbH, Hamburg |
| Stearinsäure = | Stearinsäure Edenor® ST4A der BCD-Chemie GmbH, Hamburg |
| ZnO = | Zinkoxid Zinkweiss Rotsiegel der Grillo-Werke AG, Goslar |
| Schwefel | Mahlschwefel 90/95 als Vulkanisationsmittel der SOLVAY GmbH, Hannover |
| TBBS = | Vulkanisationsbeschleuniger Vulkacit NZ der LANXESS Deutschland GmbH, Köln |
| TBzTD-70 = | Polymergebundener Vulkanisationsbeschleuniger Rhenogran® TBzTD-70 der Rhein Chemie Rheinau GmbH, Mannheim |

Die Herstellung der Kautschukmischungen erfolgte mittels eines Labor-Innenmischers Werner & Pfleiderer GK 5E.

### 3. Messung der Reißspannung und der Reißdehnung der Elastomer Komponenten in einer Zugprüfung nach DIN 53504:

Zur Bestimmung der Reißspannung und der Reißdehnung der Elastomer Komponenten wurden Zugprüfungen nach DIN 53504 bei Normklima nach DIN EN ISO 139 durchgeführt. Bei der Herstellung der Probekörper wurde nach DIN ISO 23529 verfahren. Die mittels eines Labor-Innenmischers Werner & Pfleiderer GK 5E hergestellten Kautschukmischungen gemäß der Zusammensetzungen in Tabelle 2 wurden zu 2 mm dicken Platten bei 165°C und 200 bar gepresst und vulkanisiert, danach S2 Prüfkörper mit einer Schneidvorrichtung ausgeschnitten. Nach der Dickenmessung der Probekörper wurden diese zwischen den Einspannklemmen eingespannt, eine Vorkraft aufgebracht und die Proben anschließend mit einer Prüfgeschwindigkeit von 200 mm/min bis zum Bruch belastet. Daraus wurden resultierend die Reißspannungen und Reißdehnungen erhalten. Die Ergebnisse der Zugprüfung sind in Tabelle 3 zusammengefasst.

**Tabelle 3: Ergebnisse Zugprüfung gemäß DIN 53504 der Elastomer Komponenten bezüglich Reißspannung und Reißdehnung**

| Elastomer Komponente | A |
|---|---|
| σ_{R} ≥ 10 MPa | + |
| ε_{R} ≥ 300 % | + |

Ein "+" Zeichen in der Tabelle 3 bedeutet, dass die Reißspannung σ_{R} der Elastomerkomponente ≥ 10 MPa bzw. die Reißdehnung ε_{R} der Elastomerkomponente ≥ 300 % beträgt. Ein "-" Zeichen in der Tabelle 3 bedeutet, dass die Reißspannung σ_{R} der Elastomerkomponente σ_{R} < 10 MPa bzw. die Reißdehnung der Elastomerkomponente ε_{R} < 300 % beträgt.
Wie aus Tabelle 3 ersichtlich ist, betrug die Reißspannung σ_{R} der Elastomerkomponente A, gemessen in einer Zugprüfung gemäß DIN 53504, ≥ 10 MPa und die Reißdehnung ε_{R} der Elastomerkomponente A, gemessen in einer Zugprüfung gemäß DIN 53504 ≥ 300 %. Die eingesetzte Elastomer Komponente ist damit im Sinne der vorliegenden Erfindung als technisch verwertbar zu bezeichnen.

### 4. Herstellung der Verbundprobekörper aus Polyamid Komponente und Elastomer Komponente mittels 2-Komponenten-Spritzgießen:

Zum Nachweis der Steigerung der Haftfestigkeit durch die erfindungsgemäße Werkstoffmodifikation wurden im Mehrkomponenten-Spritzgussprozess Verbundprobekörper hergestellt. Verwendet wurde eine 2-Komponenten-Spritzgussmaschine der Fa. Engel Austria GmbH, Schwertberg, Österreich, Typ Engel Combimelt 200H/200L/80, und als Spritzgusswerkzeug ein 2 Kavitäten Drehtellerwerkzeug.

Dazu wurde der Thermoplast - hier Polyamid - in die Kavität der ersten Station des Spritzgusswerkzeuges eingespritzt und eine 60 mm x 68 mm x 4 mm Platte hergestellt. Nach Ablauf der Kühlzeit öffnete das Werkzeug und das thermoplastische Formteil auf Basis von Polyamid wurde durch eine Drehung des Drehtellers um 180° in die zweite Station befördert, in der der Kautschuk dann überspritzt wurde. Die Kautschukkavität hatte die Abmaße 140 mm x 25 mm x 6 mm und bildete einen Überlapp zur Thermoplastplatte von 44,5 mm x 25 mm. Nach dem Einspritzvorgang der Kautschuk Komponente und dem Vulkanisationsprozess im Spritzgusswerkzeug wurde anschließend das Werkzeug geöffnet und der Verbundprobekörper konnte entnommen werden.

Die im Rahmen der Arbeiten zur vorliegenden Erfindung hergestellten Verbundprobekörper entsprachen in ihrem Erscheinungsbild in etwa dem Standardverbundprobekörper wie er in Fig. 1 der EP 2 392 610 A1 dargestellt ist, worin K für die Kautschuk Komponente und T für den Thermoplast - hier Polyamid - steht. EP 2 392 610 A1 wird von der vorliegenden Anmeldung vollumfänglich umfasst.

Die Herstellung von Verbundprobekörpern aus Polyamid Komponente und Elastomer Komponente wurde mit verschiedenen 2K-Spritzgieß-Einstellungen als direkter 2K-Spritzgieß-Prozess, d.h. als einstufiger 2K-Spritzgieß-Prozess, durchgeführt. Auf die Herstellung der Polyamid Komponente erfolgt direkt der Spritzguss der Elastomer Komponente

Die 2K-Spritzgieß-Einstellungen für die Herstellung von Verbundprobekörpern aus Polyamid Komponente und Elastomer Komponente sind in Tabelle 4 und Tabelle 5 zusammengefasst.

**Tabelle 4: 2K-Spritzgieß-Einstellungen für die Herstellung von Verbundprobekörpern aus Polyamid Komponente und Elastomer Komponente**

| 2K-Spritzgieß-Einstellung | | Zylindertemperatur [°C] | Werkzeugtemperatur [°C] | Einspritzgeschwindigkeit [cm³/s] | Nachdruck [bar] | Nachdruck -zeit [s] | Kühlzeit [s] |
|---|---|---|---|---|---|---|---|
| 1 | Polyamid | 270 / 275 / 275 / 270 / 265 | 165 | 15 | 450 | 20 | 15 |
| | Elastomer | 100 | 165 | 7 | 300 | 90 | - |
| 2 | Polyamid | 270 / 275 / 275 / 270 / 265 | 150 | 5 | 450 | 20 | 15 |
| | Elastomer | 100 | 150 | 7 | 300 | 90 | - |
| 3 | Polyamid | 270 / 275 / 275 / 270 / 265 | 170 | 5 | 450 | 20 | 15 |
| | Elastomer | 100 | 170 | 7 | 300 | 90 | - |

**Tabelle 5: Vulkanisationszeiten, angegeben in Minuten, für die Herstellung der Elastomer Komponente der Verbundprobekörper bei entsprechenden Werkzeugtemperaturen**

| Werkzeugtemperatur | 150 °C | 165 °C | 170 °C |
|---|---|---|---|
| Elastomer Komponente A | 18 | 10 | 8 |

In der Tabelle 6 ist aufgeführt, mit welchen Spritzgieß-Einstellungen die aus der Polyamid Komponente 1 bzw. 2 und Elastomer Komponente A hergestellten Verbundprobekörper gefertigt wurden.

### 5. Prüfung der Verbundprobekörper aus Polyamid Komponente und Elastomer Komponente mittels Schälversuch:

Nach einer Lagerung der Verbundprobekörper auf Basis der Zusammensetzungen Polyamid Komponente 1 bis 2 und Elastomer Komponente A von mindestens 24 Stunden wurden diese zur Prüfung der Verbundfestigkeit einem 90° Schälversuch unterzogen. Der Schälversuch wurde in Anlehnung an DIN ISO 813 an einer Universalprüfmaschine Zwick Z010 der Zwick GmbH & Co. KG, Ulm, Deutschland durchgeführt. Hierbei wurde der Verbundprüfkörper unter einem Winkel von 90° in eine Zugprüfmaschine mit spezieller Vorrichtung zur Aufnahme der Thermoplast Komponente - hier Polyamid Komponente - eingespannt und auf Zug belastet. Die Vorkraft betrug 0,3 N, die Prüfgeschwindigkeit 100 mm/min. Die maximale Verbundfestigkeit ergibt sich aus der maximal gemessenen Kraft in N bezogen auf die Breite der Elastomer Komponente von 25 mm.

Die Ergebnisse der Schälversuche der unter verschiedenen 2K-Spritzgieß-Einstellungen 1 bis 3 hergestellten Verbundprobekörper aus Polyamid Komponente 1 bzw. 2 und Elastomer Komponente A sind in Tabelle 6 zusammengefasst.

**Tabelle 6: Ergebnisse der Schälversuche der Verbundprobekörper aus Polyamid Komponente 1 bzw. 2 und Elastomer Komponente A**

| 2K-Spritzgieß-Einstellung | 1 | | 2 | | 3 | |
|---|---|---|---|---|---|---|
| Polyamid Komponente | | | | | | |
| 1 | Vgl. 1 | - | Vgl. 2 | - | Vgl. 3 | - |
| 2 | Bsp. 1 | + | Bsp. 2 | + | Bsp. 3 | + |

Ein "+" Zeichen in Tabelle 6 kennzeichnet einen Verbundprobekörper aus einer Polyamid Komponente und einer Elastomer Komponente, bei dem im Schälversuch eine Haftfestigkeit von ≥ 3 N/mm ermittelt wurde. Ein "-"Zeichen in Tabelle 6 kennzeichnet einen Verbundprobekörper aus einer Polyamid Komponente und einer Elastomer Komponente, bei dem im Schälversuch eine Haftfestigkeit von < 3 N/mm ermittelt wurde.

Tabelle 6 zeigt, dass die erfindungsgemäße Verwendung von bei RT flüssigem Polybutadien-Copolymer zur Additivierung der Polyamid Komponente bei der Herstellung von Verbundprobekörpern in Direkthaftung, d.h. ohne dass ein Haftvermittler eingesetzt wird, mit einer Elastomer Komponente, erhältlich aus mit elementarem Schwefel zu vulkanisierenden bzw. zu vernetzenden Kautschuk, zu einem festen Verbund mit einer Haftfestigkeit von mindestens 3 N/mm führte. Gleichzeitig verfügten die Elastomer Komponenten in diesen Verbundteilen über eine Reißspannung von wenigstens 10 MPa und eine Reißdehnung von mindestens 300%, d.h. sie sind technisch verwertbar. Für die Herstellung der Probekörper mit festem Verbund wurden die Polybutadien-Copolymer enthaltenen Polyamid Formmassen PA6 und Elastomer Komponenten, erhältlich aus mit elementarem Schwefel zu vulkanisierenden bzw. zu vernetzenden Kautschuken, hier EPDM, verwendet. Beispiele 1 bis 3 (Bsp. 1 bis 3) zeigen, dass dieser feste Verbund unter Verwendung von unterschiedlichen 2K-Spritzgieß-Einstellungen 1 bis 3 erzielt werden kann.
Vergleichsbeispiele 1 bis 3 (Vgl. 1 bis 3) der Tabelle 6 dokumentieren, dass eine nicht Polybutadien-Copolymer enthaltene Polyamid Formmasse PA6 unter Verwendung von unterschiedlichen 2K-Spritzgieß-Einstellungen 1 bis 3 nicht zu einem festen Verbund mit Elastomer Komponenten, erhältlich aus mit elementarem Schwefel zu vulkanisierenden bzw. zu vernetzenden Kautschuken, hier EPDM, bei einer Haftfestigkeit von kleiner 3 N/mm führt.

Die Beispiele 1 bis 3 der Tabelle 6 zeigen, dass das Styrol-1,3-Butadien-Copolymer Ricon® 181 ohne zusätzlichen Haftvermittler für einen festen Verbund durch Direkthaftung einer Polyamid Komponente und einer Elastomer Komponente, letztere erhältlich aus mit elementarem Schwefel als Vernetzungsmittel zu vulkanisierenden bzw. zu vernetzenden Kautschuk, einsetzbar sind.

## Patentansprüche

1. Verbundteil, das aus mindestens einem Teilstück hergestellt aus mindestens einer Polyamidformmasse und mindestens einem Teilstück hergestellt aus wenigstens einem Elastomer zusammengesetzt ist, **dadurch gekennzeichnet, dass** die Polyamidformmasse eine Mischung von Polyamid mit wenigstens einem bei Raumtemperatur (RT) flüssigen Polybutadien-Copolymer enthält und das Elastomer Teilstück aus mit elementarem Schwefel zu vernetzenden bzw. zu vulkanisierenden Kautschuk hergestellt wurde.

2. Verbundteil gemäß Anspruch 1, **dadurch gekennzeichnet, dass** die Polyamidformmasse zu mindestens 30 Gew.-% eine Mischung von
a) 60 bis 99,9 Gew.-Teile Polyamid sowie
b) 0,1 bis 40 Gew.-Teile wenigstens eines bei RT flüssigen Polybutadien-Copolymers enthält,
wobei die Summe der Gew.-Teile von a) und b) 100 beträgt.

3. Verbundteil gemäß einem der Ansprüche 1 oder 2, **dadurch gekennzeichnet, dass** das Polybutadien-Copolymer eine dynamische Viskosität, gemessen mit der Kegel-Platte-Methode nach DIN 53019 bei einer Schergeschwindigkeit von 50 1/s, bei Normaldruck und bei einer Temperatur von 25 °C im Bereich von 100 bis 1.000.000 mPas aufweist.

4. Verbundteil gemäß Anspruch 3, **dadurch gekennzeichnet, dass** als Polybutadien-Copolymer ein Copolymer von 1,3-Butadien mit einem weiteren Olefin als Monomer, bevorzugt Styrol oder Acrylnitril, eingesetzt wird.

5. Verbundteil gemäß einem der Ansprüche 1 bis 4, **dadurch gekennzeichnet, dass** die Polyamid Komponente kein Coagenz enthält und es sich bei Coagenzien um mehrfach funktionelle Verbindungen handelt.

6. Verbundteil gemäß einem der Ansprüche 1 bis 5, **dadurch gekennzeichnet, dass** sich die mit Schwefel zu vernetzende Kautschuk Komponente durch die Gegenwart von C=C- Doppelbindungen auszeichnet.

7. Verbundteil gemäß Anspruch 6, **dadurch gekennzeichnet, dass** es sich bei den C=C-doppelbindungshaltigen Kautschuken um solche auf Basis von Dienen handelt.

8. Verbundteil gemäß Anspruch 7, **dadurch gekennzeichnet, dass** es sich um Kautschuke der Reihe Naturkautschuk (NR), Ethylen-Propylen-Dien Kautschuke (EPDM), Styrol/Diolefin-Kautschuke, bevorzugt Styrol/Butadienkautschuk (SBR), insbesondere E-SBR, Polybutadienkautschuk (BR), Polyisopren (IR), Butylkautschuk, insbesondere Isobuten/Isopren-Kautschuk (IIR), Halobutylkautschuk, insbesondere Chlor- oder Brombutylkautschuk (XIIR), Nitrilkautschuk (NBR), hydrierter Nitrilkautschuk (H-NBR), carboxylierter Butadien/Acrylnitril-Kautschuk (XNBR) oder Polychloropren (CR) oder um Mischungen von zwei oder mehr der zuvor genannten Kautschuke handelt.

9. Verbundteil gemäß Anspruch 8, **dadurch gekennzeichnet, dass** wenigstens ein Kautschuk aus der Gruppe Naturkautschuk (NR), Ethylen-Propylen-Dien Kautschuk (EPDM), Styrol/Diolefin-Kautschuk (SBR), carboxylierter Butadien/Acrylnitril-Kautschuk (XNBR), Polychloropren (CR), Nitrilkautschuk (NBR) oder Polybutadien (BR) oder Mischungen von zwei oder mehr der zuvor genannten Kautschuke eingesetzt wird.

10. Verbundteil gemäß einem der Ansprüche 1 bis 9, **dadurch gekennzeichnet, dass** als Polyamid PA6, PA66, PA610, PA88, PA612, PA810, PA108, PA9, PA613, PA614, PA812, PA1010, PA10, PA814, PA148, PA1012, PA11, PA1014, PA1212, PA12 oder Mischungen der genannten Polyamide oder Caprolactam als Comonomer enthaltende Copolyamide eingesetzt werden, bevorzugt PA6 oder PA66.

11. Verbundteil gemäß Anspruch 10, **dadurch gekennzeichnet, dass** als Caprolactam als Comonomer enthaltende Copolyamide statistische, teilkristalline, aliphatische, Copolyamide, bevorzugt PA 6/66, eingesetzt werden.

12. Verbundteil gemäß Anspruch 11, **dadurch gekennzeichnet, dass** als Mischungen Polyamidkombinationen der Reihe PA6/PA66, PA12/PA1012, PA12/1212, PA612/PA12, PA613/PA12, PA1014/PA12 oder PA610/PA12 sowie entsprechende Kombinationen mit PA11, besonders bevorzugt PA6/PA66 eingesetzt werden.

13. Verwendung von wenigstens einem bei Raumtemperatur (RT) flüssigen Polybutadien-Copolymers in der Polyamid Komponente zur Steigerung der Verbundhaftung eines Verbundteils aus mindestens einem Teilstück hergestellt aus einer Polyamidformmasse und mindestens einem Teilstück hergestellt aus einem Elastomer, erhältlich aus mit elementarem Schwefel zu vulkanisierenden bzw. zu vernetzenden Kautschuk, das durch wenigstens ein Formgebungsverfahren erhalten wurde.

14. Verwendung gemäß Anspruch 13, **dadurch gekennzeichnet, dass** das Verbundteil in flüssige Medien und/oder gasförmige Medien führenden Erzeugnissen, bevorzugt in der chemischen Industrie, der Haushaltsgeräteindustrie oder der Kraftfahrzeugindustrie, besonders bevorzugt als Dichtungen, Membranen, Gasdruckspeicher, Schläuche, Gehäuse für Motoren, Pumpen und elektrisch betriebene Werkzeuge, Walzen, Reifen, Kupplungen, Anschlagpuffer, Transportbänder, Treibriemen, Mehrschicht-Laminate und Mehrschicht-Folien sowie schall- und schwingungsdämpfende Bauteile, eingesetzt wird.

15. Verfahren zur Herstellung von Verbundteilen die aus mindestens einem Teilstück hergestellt aus mindestens einer Polyamidformmasse und mindestens einem Teilstück hergestellt aus wenigstens einem Elastomer, erhältlich aus mit elementarem Schwefel als Vernetzungsmittel zu vulkanisierenden bzw. zu vernetzenden Kautschuk, zusammengesetzt sind, **dadurch gekennzeichnet, dass** man durch wenigstens ein Formgebungsverfahren entweder das Teilstück aus der Polyamidformmasse mit einer elementaren Schwefel enthaltenden Kautschuk Komponente beaufschlagt und den Vulkanisationsbedingungen des Kautschuks aussetzt, oder das Teilstück aus mit elementarem Schwefel vernetztem Kautschuk mit einer Polyamidformmasse beaufschlagt und die Polyamidformmasse eine Mischung von Polyamid mit wenigstens einem bei Raumtemperatur (RT) flüssigen Polybutadien-Copolymer enthält.

## Claims

1. Composite part composed of at least one part produced from at least one polyamide moulding composition and at least one part produced from at least one elastomer, **characterized in that** the polyamide moulding composition contains a mixture of polyamide having at least one polybutadiene copolymer which is liquid at room temperature (RT) and the elastomer part has been produced from rubber which is to be crosslinked or vulcanized with elemental sulphur.

2. Composite part according to Claim 1, **characterized in that** the polyamide moulding composition contains at least 30% by weight of a mixture of
a) 60 to 99.9 parts by weight of polyamide and
b) 0.1 to 40 parts by weight of at least one polybutadiene copolymer which is liquid at RT,
where the sum total of the parts by weight of a) and b) is 100.

3. Composite part according to Claim 1 or 2, **characterized in that** the polybutadiene copolymer has a dynamic viscosity measured by the cone-plate method to DIN 53019 at a sheer rate of 50 1/s, at standard pressure and at a temperature of 25°C in the range from 100 to 1 000 000 mPas.

4. Composite part according to Claim 3, **characterized in that** a copolymer of 1,3-butadiene with a further olefin as monomer, preferably styrene or acrylonitrile, is used as polybutadiene copolymer.

5. Composite part according to any of Claims 1 to 4, **characterized in that** the polyamide component does not contain any coagent and the coagents are polyfunctional compounds.

6. Composite part according to any of Claims 1 to 5, **characterized in that** the rubber component which is to be crosslinked with sulphur features the presence of C=C double bonds.

7. Composite part according to Claim 6, **characterized in that** the rubbers containing C=C double bonds are those based on dienes.

8. Composite part according to Claim 7, **characterized in that** the rubbers are those from the group of natural rubber (NR), ethylene-propylene-diene rubbers (EPDMs), styrene/diolefin rubbers, preferably styrene/butadiene rubber (SBR), especially E-SBR, polybutadiene rubber (BR), polyisoprene (IR), butyl rubber, especially isobutene/isoprene rubber (IIR), halobutyl rubber, especially chloro- or bromobutyl rubber (XIIR), nitrile rubber (NBR), hydrogenated nitrile rubber (H-NBR), carboxylated butadiene/acrylonitrile rubber (XNBR) or polychloroprene (CR), or mixtures of two or more of the aforementioned rubbers.

9. Composite part according to Claim 8, **characterized in that** at least one rubber from the group of natural rubber (NR), ethylene-propylene-diene rubber (EPDM), styrene/diolefin rubber (SBR), carboxylated butadiene/acrylonitrile rubber (XNBR), polychloroprene (CR), nitrile rubber (NBR) or polybutadiene (BR) or mixtures of two or more of the aforementioned rubbers are used.

10. Composite part according to any of Claims 1 to 9, **characterized in that** the polyamide used is PA6, PA66, PA610, PA88, PA612, PA810, PA108, PA9, PA613, PA614, PA812, PA1010, PA10, PA814, PA148, PA1012, PA11, PA1014, PA1212, PA12 or mixtures of said polyamides, or copolyamides containing caprolactam as comonomer, preferably PA6 or PA66.

11. Composite part according to Claim 10, **characterized in that** copolyamides containing caprolactam as comonomer used are random semicrystalline aliphatic copolyamides, preferably PA 6/66.

12. Composite part according to Claim 11, **characterized in that** mixtures used are polyamide combinations from the group of PA6/PA66, PA12/PA1012, PA12/1212, PA612/PA12, PA613/PA12, PA1014/PA12 or PA610/PA12 and corresponding combinations with PA11, more preferably PA6/PA66.

13. Use of at least one polybutadiene copolymer which is liquid at room temperature (RT) in the polyamide component for boosting Composite adhesion of a composite part comprising at least one part produced from a polyamide moulding composition and at least one part produced from an elastomer, obtainable from rubber to be crosslinked or to be vulcanized with elemental sulphur, and obtained by means of at least one shaping method.

14. Use according to Claim 13, **characterized in that** the composite part is used in products that conduct liquid media and/or gaseous media, preferably in the chemical industry, the domestic appliance industry or the motor vehicle industry, more preferably as gaskets, membranes, gas pressure accumulators, hoses, housings for motors, pumps and electrically operated tools, rollers, tyres, couplings, stop buffers, conveyor belts, drive belts, multilayer laminates and multilayer films, and also sound- and vibration-deadening components.

15. Method for producing composite parts which are composed of at least one part produced from at least one polyamide moulding composition and at least one part produced from at least one elastomer obtainable from rubber that is to be vulcanized or crosslinked with elemental sulphur as crosslinking agent, **characterized in that** by at least one shaping method either the part composed of the polyamide moulding composition is contacted with a rubber component comprising elemental sulphur and subjected to the vulcanization conditions for the rubber, or the part composed of elemental sulphur-crosslinked rubber is contacted with a polyamide moulding composition, and the polyamide moulding composition contains a mixture of polyamide with at least one polybutadiene copolymer which is liquid at room temperature (RT).

## Revendications

1. Pièce composite, composée d'au moins une pièce partielle fabriquée à partir d'au moins une masse de moulage à base de polyamide et d'au moins une pièce partielle fabriquée à partir d'au moins un élastomère, **caractérisée en ce que** la masse de moulage à base de polyamide contient un mélange de polyamide avec au moins un copolymère de polybutadiène liquide à température ambiante (RT) et la pièce partielle élastomère a été préparée à partir de caoutchouc à réticuler ou à vulcaniser avec du soufre élémentaire.

2. Pièce composite selon la revendication 1, **caractérisée en ce que** la masse de moulage à base de polyamide est constituée à raison d'au moins 30% en poids par un mélange de
a) 60 à 99,9 parties en poids de polyamide ainsi que
b) 0,1 à 40 parties en poids d'au moins un copolymère de polybutadiène liquide à RT,
la somme des parties en poids de a) et de b) valant 100.

3. Pièce composite selon l'une quelconque des revendications 1 ou 2, **caractérisée en ce que** le copolymère de polybutadiène présente une viscosité dynamique, mesurée par le procédé cône-plaque selon la norme DIN 53019 à une vitesse de cisaillement de 50 1/s, à pression normale et à une température de 25°C, dans la plage de 100 à 1.000.000 mPa.s.

4. Pièce composite selon la revendication 3, **caractérisée en ce qu'**on utilise, comme copolymère de polybutadiène, un copolymère de 1,3-butadiène avec une autre oléfine comme monomère, de préférence le styrène ou l'acrylonitrile.

5. Pièce composite selon l'une quelconque des revendications 1 à 4, **caractérisée en ce que** le composant à base de polyamide ne contient pas de coagent et où il s'agit, pour les co-agents, de composés polyfonctionnels.

6. Pièce composite selon l'une quelconque des revendications 1 à 5, **caractérisée en ce que** le composant à base de caoutchouc à réticuler avec du soufre se **caractérise par** la présence de doubles liaisons C=C.

7. Pièce composite selon la revendication 6, **caractérisée en ce qu'**il s'agit, pour les caoutchoucs contenant des doubles liaisons C=C, de caoutchoucs à base de diènes.

8. Pièce composite selon la revendication 7, **caractérisée en ce qu'**il s'agit de caoutchoucs de la série caoutchouc naturel (NR), caoutchoucs à base d'éthylène-propylène-diène (EPDM), caoutchoucs de styrène/dioléfine, de préférence caoutchouc de styrène/butadiène (SBR), en particulier E-SBR, caoutchouc de polybutadiène (BR), polyisoprène (IR), caoutchouc de butyle, en particulier caoutchouc d'isobutène/isoprène (IIR), caoutchouc d'halogénobutyle, en particulier caoutchouc de chlorobutyle ou bromobutyle (XIIR), caoutchouc de nitrile (NBR), caoutchouc de nitrile hydrogéné (H-NBR), caoutchouc carboxylé de butadiène/acrylonitrile (XNBR) ou polychloroprène (CR) ou de mélanges de deux des caoutchoucs susmentionnés ou plus.

9. Pièce composite selon la revendication 8, **caractérisée en ce qu'**on utilise au moins un caoutchouc du groupe caoutchouc naturel, (NR), caoutchouc à base d'éthylène-propylène-diène (EPDM), caoutchouc de styrène/dioléfine (SBR), caoutchouc carboxylé de butadiène/acrylonitrile (XNBR), polychloroprène (CR), caoutchouc de nitrile (NBR) ou polybutadiène (BR) ou des mélanges de deux des caoutchoucs susmentionnés ou plus.

10. Pièce composite selon l'une quelconque des revendications 1 à 9, **caractérisée en ce qu'**on utilise, comme polyamide, les polyamides PA6, PA66, PA610, PA88, PA612, PA810, PA108, PA9, PA613, PA614, PA812, PA1010, PA10, PA814, PA148, PA1012, PA11, PA1014, PA1212, PA12 ou des mélanges des polyamides mentionnés ou des copolyamides contenant du caprolactame comme comonomère, de préférence le PA6 ou le PA66.

11. Pièce composite selon la revendication 10, **caractérisée en ce qu'**on utilise, comme copolyamides contenant du caprolactame comme comonomère, des copolyamides statistiques, partiellement cristallins, aliphatiques, de préférence le PA 6/66.

12. Pièce composite selon la revendication 11, **caractérisée en ce qu'**on utilise, comme mélanges, des combinaisons de polyamides de la série PA6/PA66, PA12/PA1012, PA12/1212, PA612/PA12, PA613/PA12, PA1014/PA12 ou PA610/PA12 ainsi que des combinaisons correspondantes avec du PA11, de manière particulièrement préférée du PA6/PA66.

13. Utilisation d'au moins un copolymère de polybutadiène liquide à température ambiante (RT) dans le composant à base de polyamide pour augmenter l'adhérence de liaison d'une pièce composite constituée par au moins une pièce partielle fabriquée à partir d'une masse de moulage à base de polyamide et par au moins une pièce partielle fabriquée à partir d'un élastomère, pouvant être obtenu à partir de caoutchouc à vulcaniser ou à réticuler à l'aide de soufre élémentaire, qui a été obtenue par au moins un procédé de façonnage.

14. Utilisation selon la revendication 13, **caractérisée en ce que** la pièce composite est utilisée dans des produits guidant des milieux liquides et/ou gazeux, de préférence dans l'industrie chimique, l'industrie des appareils domestiques ou l'industrie automobile, de manière particulièrement préférée en tant que joints, membranes, accumulateurs de pression gazeuse, flexibles, carters pour moteurs, pompes et outils électriques, cylindres, pneus, embrayages, tampons de butée, courroies de transport, courroies d'entraînement, stratifiés et feuilles multicouches ainsi que pièces d'amortissement du bruit et des vibrations.

15. Procédé pour la fabrication de pièces composites, qui sont composées d'au moins une pièce partielle fabriquée à partir d'au moins une masse de moulage à base de polyamide et d'au moins une pièce partielle fabriquée à partir d'au moins un élastomère, pouvant être obtenu à partir de caoutchouc à vulcaniser ou à réticuler à l'aide de soufre élémentaire, **caractérisé en ce que**, par au moins un procédé de façonnage, on charge, soit la pièce partielle en masse de moulage à base de polyamide par un composant en caoutchouc contenant du soufre élémentaire et on la soumet aux conditions de vulcanisation du caoutchouc, soit la pièce partielle en caoutchouc réticulé à l'aide de soufre élémentaire par une masse de moulage à base de polyamide et la masse de moulage à base de polyamide contient un mélange de polyamide avec au moins un copolymère de polybutadiène liquide à température ambiante (RT).
